# EUROPÄISCHE PATENTSCHRIFT

(11) **EP 3 336 732 B1**
(45) Veröffentlichungstag und Bekanntmachung des Hinweises auf die Patenterteilung: **14.04.2021**
(21) Anmeldenummer: 17207436.1
(22) Anmeldetag: 14.12.2017
(51) Int. Cl.: G06F 21/31, H04L 29/06

(54) **NUTZERAUTHENTIFIZIERUNG MIT EINER MEHRZAHL VON MERKMALEN**
USER AUTHENTICATION WITH A PLURALITY OF CHARACTERISTICS
AUTHENTIFICATION D'UTILISATEUR À L'AIDE DE PLUSIEURS CARACTÉRISTIQUES

(30) Priorität: 16.12.2016 DE 102016225354
(43) Veröffentlichungstag der Anmeldung: 20.06.2018
(73) Patentinhaber: Bundesdruckerei GmbH, 10969 Berlin (DE)
(72) Erfinder: DIETRICH, Frank, 12437 Berlin (DE); SEEGEBARTH, Christian, 20249 Hamburg (DE)
(74) Vertreter: Richardt Patentanwälte PartG mbB

(56) Entgegenhaltungen:
- US-A1- 2013 198 832
- US-A1- 2014 096 177
- US-A1- 2015 237 038
- US-B1- 9 203 860

## Beschreibung

Die Erfindung betrifft ein Verfahren zur dynamischen Multifaktorauthentifizierung eines Nutzers sowie ein Computerprogrammprodukt und ein Computersystem zur Ausführung des Verfahrens.

Aus dem Stand der Technik sind Zwei-Faktor-Authentifizierungsverfahren bekannt. Eine solche Zwei-Faktor-Authentifizierung dient der Authentifizierung eines Nutzers mittels der Kombination zweier verschiedener und insbesondere unabhängiger Komponenten, auch Faktoren genannt. Diese Faktoren können beispielsweise bereitgestellt werden in Form eines Gegenstandes, der sich im Besitz des Nutzers befindet in Form von Wissen, welches nur der Nutzer hat, oder in Form eines Merkmals, welches untrennbar mit dem Nutzer verbunden ist. Ein entsprechender Gegenstand kann beispielsweise eine Bankkarte sein, entsprechendes Wissen kann beispielsweise ein Benutzername oder ein Kennwort sein und ein entsprechendes untrennbar mit dem Nutzer verbundenes Merkmal kann beispielsweise ein Fingerabdruck sein. Aus dem Alltag ist ein solches Zwei-Faktor-Authentifizierungsverfahren beispielsweise von Geldautomaten bekannt, bei welchen der Nutzer sich zum Geldabheben durch die Kombination aus einer Bankkarte und einer PIN authentisieren muss.

Bekannte Zwei-Faktor-Authentifizierungsverfahren haben jedoch den Nachteil, dass sie statisch sind, d.h. stets dieselbe Kombination von Faktoren geprüft wird. Dies führt bei lediglich zwei Faktoren dazu, dass das Verfahren anfällig ist gegenüber Manipulationsversuchen, insbesondere Diebstahl.

Die US 9,203,860 B1 beschreibt ein Verfahren zur Authentifizierung und/oder Identifizierung. Das Verfahren bestimmt, wann ein Nutzer an einer eingeschränkten Aktivität teilnehmen darf. Dabei umfasst das Verfahren ein Aufnehmen eines ersten Kontakts mit einem Nutzer über einen Kanal, wobei eine identifizierende Information des Nutzers erfasst wird, ein Empfangen einer Anforderung von dem Nutzer zur Teilnahme an einer Aktivität, ein Bestimmen einer Aktivitätsvertrauensschwelle, die für die Aktivität erforderlich ist, basierend auf der identifizierenden Information, ein Bestimmen eines anfänglichen Identitätsvertrauenswerts für den Nutzer basierend auf der identifizierenden Information, ein Vergleichen der anfänglichen Identitätsvertrauenswerts mit der Aktivitätsvertrauensschwelle. Basierend auf dem Vergleich wird der Nutzer entweder zur Teilnahme an der Aktivität zugelassen, die Teilnahme des Nutzers an der Aktivität abgelehnt, oder es wird eine zusätzliche identifizierende Information gesammelt.

Die US 2015/237038 A1 beschreibt ein Gerätefingerabdrucksystem, welches einen zusätzlichen Authentifizierungsfaktor bietet. Ein Nutzergerät wird zusammen mit Nutzer-ID-Parametern zu einem Authentifizierungssystem umgeleitet.

Dem Nutzergerät werden Anweisungen gesendet, Geräteeigenschaftsinformationen zu sammeln und an das Authentifizierungssystem zurückzusenden. Zur Authentifizierung wird ein eindeutiger Fingerabdruck des Geräts erstellt. Ferner wird festgestellt, ob der Fingerabdruck des Geräts zuvor gesehen wurde. Falls der Fingerabdruck des Geräts zuvor gesehen wurde, sendet das Authentifizierungssystem ein Authentifizierungstoken zurück, der anzeigt, dass der zusätzliche Faktor der Authentifizierung erfolgreich war. Falls der Fingerabdruck des Geräts zuvor nicht gesehen wurde, führt das Authentifizierungssystem eine einmalige Passwortauthentifizierung als zusätzlichen Faktor durch. Falls diese erfolgreich ist, wird der Fingerabdruck in Verbindung mit dem Nutzergerät für die zukünftige Authentifizierung als ein zusätzlicher Faktor gespeichert.

Die US 2014/0096177 A1 beschreibt System und Verfahren, welche ein Bestimmen einer zusammengesetzten Rate falscher Übereinstimmungen für eine Vielzahl von Authentifizierungsfaktoren in einer Client-Geräteumgebung ermöglichen. Die zusammengesetzte Rate falscher Übereinstimmungen wird auf eine Punktzahl abgebildet, wobei eine Bestätigungsnachricht basierend auf der Punktzahl erzeugt wird.

Der Erfindung liegt demgegenüber die Aufgabe zugrunde, ein effizientes und sicheres Verfahren zur Authentifizierung eines Nutzers zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zur dynamischen Multifaktorauthentifizierung eines Nutzers durch ein ID-Provider-Computersystem, welches Zugriff auf eine Datenbank mit dem Nutzer zugeordneten Referenzwerten für eine Mehrzahl von Merkmalen besitzt. Das Verfahren umfasst:
- Empfangen einer Authentifizierungsanfrage zur Authentifizierung des Nutzers,
- Auswahl einer für eine erfolgreiche Authentifizierung des Nutzers nachzuweisende Kombination von Merkmalen, welche dem Nutzer zugeordnet sind,
- Abfragen von Messwerten der für die Authentifizierung nachzuweisenden Merkmale,
- Empfangen der abgefragten Messwerte,
- Vergleichen der empfangenen Messwerte mit den Referenzwerten der ausgewählten Merkmalskombination,
- Bestimmen eines Authentifizierungsgrads des Nutzers unter Verwendung des Grads der Übereinstimmungen zwischen den Messwerten und den Referenzwerten,
- falls der bestimmte Authentifizierungsgrad über einem ersten der Authentifizierungsanfrage zugeordneten Schwellenwert liegt, Erzeugen und Senden eines Authentisierungstokens zur Bestätigung einer erfolgreichen Authentifizierung des Nutzers.

Der Begriff "ID-Provider-Computersystem" bezeichnet ein stationäres oder tragbares Computersystem, welches dazu konfiguriert ist einen Nutzer unter Verwendung einer dynamischen Multifaktorauthentifizierung zu authentifizieren und eine erfolgreiche Authentifizierung durch erzeugen eines Authentifizierungstokens zu bestätigen. Zudem kann das ID-Provider-Computersystem über Attribute des Nutzers verfügen und diese auf eine erfolgreiche Authentifizierung des Nutzers hin zusammen mit dem Authentisierungstoken bereitstellen. Zu diesem Zweck umfasst der Authentifizierungstoken beispielsweise ein dem Nutzer zugeordnetes Attribut bzw. Daten, welche den Nutzer oder eine Eigenschaft des Nutzers identifizieren. Ferner bestätigt der Authentifizierungstoken, beispielsweise durch eine Signatur des ID-Provider-Computersystem, die erfolgreiche Authentifizierung des Nutzers sowie die Zuordnung des Attributs zu dem authentifizierten Nutzer. Schließlich kann der Authentifizierungstoken noch weitere Informationen über den Nutzer und/oder den Authentifizierungsvorgang umfassen.

Bei einem entsprechenden Attribut kann es sich beispielsweise um eine Angabe bezüglich der Identität des authentifizierten Nutzers handeln, insbesondere bezüglich dessen digitaler Identität. Attribute können beispielsweise umfassen: Name, Vorname und/oder Adresse. Ein Attribut kann alternativer Weise aber auch nicht der Feststellung der Identität des Nutzers, sondern beispielsweise zur Überprüfung der Berechtigung des Benutzers zur Inanspruchnahme eines bestimmten Dienstes und/oder Funktionalität dient, wie zum Beispiel das Alter des Nutzers oder ein anderes Attribut, welches die Zugehörigkeit des Nutzers zu einer bestimmten Gruppe dokumentiert mit bestimmten Berechtigungen.

Der ID-Provider-Computersystem kann eindeutig einem bestimmten Nutzer oder einem zentralen ID-Providerservice zugeordnet sein. Bei einem ID-Provider-Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um ein stationäres Computersystem, wie beispielsweise einen Personalcomputer oder einen in einer Client-Server-Umgebung eingebundenen Server handeln.

Unter einer "Datenbank" wird hier allgemein eine Zusammenstellung von Daten in Form von Datenbankeinträgen gemäß einer festgelegten Organisationsstruktur der Datenbank verstanden. Eine Datenbank kann zudem ein Verwaltungsprogramm zum Verwalten der Datenbank umfassen. Bei der Datenbank kann es sich um eine kryptographisch gesicherte Datenbank handeln. Unter einer kryptographisch gesicherten Datenbank wird eine Datenbank verstanden, deren Einträge kryptographisch gesichert sind. Beispielsweise umfasst die Datenbank verschlüsselte und/oder signierte Daten.

Ein Computer bzw. Computersystem kann eine Schnittstelle zur Verbindung mit dem Netzwerk umfassen, wobei es sich bei dem Netzwerk um ein privates oder öffentliches Netzwerk handeln kann, insbesondere das Internet, ein Energieversorgungsnetz oder ein anderes Kommunikationsnetz. Je nach Ausführungsform kann diese Verbindung auch über ein Mobilfunknetz hergestellt werden.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA oder Vertrauensdiensteanbieter/VDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokuments sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung zwischen dem ID-Provider-Computersystem und dem Computersystem und/oder den Sensorgeräten oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann das ID-Provider-Computersystem ebenso wie das Computersystem und/oder Sensorgeräte eine Standardfunkschnittstelle zur Anbindung an ein WLAN aufweisen, an die das ID-Provider-Computersystem und/oder das Computersystem und/oder Sensorgeräte zur Herstellung einer lokalen Verbindung für die Übertragung des Authentifizierungstokens angeschlossen sein kann. Ferner kann es sich um ein öffentliches Netzwerk, wie beispielsweise das Internet handeln.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten, Zustände und/oder Zustandsänderung von elektronischen Geräten bzw. in Folge einer Benutzung durch einen Nutzer wiedergeben.

Sensoren können von Sensorgeräten bereitgestellt werden, welche die Sensoren umfassen. Bei den entsprechenden Sensorgeräten handelt es sich um elektronische Geräten, welche zumindest einen Sensor umfassen und informationstechnisch aufgerüstet sind, sodass sie erfasste Messwerte dem ID-Provider-Computersystem zur Verfügung stellen können.

Insbesondere kann es sich bei den Sensorgeräten um tragbare elektronische Geräte handeln. Beispielsweise handelt es sich um sog. "wearables" bzw. "wearable computers", d.h. tragbare elektronische Geräte bzw. tragbare Computersysteme, welche während der Anwendung am Körper des Nutzers angeordnet sind. Beispiele für Wearables sind Smartwatches, d.h. Uhren mit Computerfunktionalität und - konnektivität, Activity Tracker, d.h. Gerät zur Aufzeichnung und Versendung fitness- und/oder gesundheitsrelevanter Daten, Smartglasses, d.h. Brillen, deren Innenseiten als Bildschirm dienen, oder Kleidungsstücke, in die elektronische Hilfsmittel zur Kommunikation eingearbeitet sind.

Ferner kann es sich bei einem Sensorgerät um einen tragbaren Computer handeln, wie zum Beispiel einen Laptop oder Palmtop-Computer, einen Personal Digital Assistant, ein mobiles Telekommunikationsgerät, insbesondere ein Smartphone, oder dergleichen handeln. Nach weiteren Ausführungsformen kann es sich bei den Sensorgeräten auch um ein mit einem Computersystem ausgestattetes Fortbewegungsmittel, wie etwa ein Auto, Flugzeug, Schiff oder Zug mit Bordcomputer, handeln.

Nach weiteren Ausführungsformen kann es sich bei einem Sensorgerät um eine stationären Computer handeln, dessen bestimmungsgemäßer Gebrauch ortsfest erfolgt, wie etwa ein Personalcomputer, ein Server, ein Steuercomputer eines Smarthome-Systems, ein Access Point oder Router eines lokales WLAN-Netzwerks, ein Multimediagerät mit Computerfunktionalität und -konnektivität, wie etwa ein Smart-TV, ein Steuersystem einer Schließanlage oder ein "smart device" bzw. intelligenter Gegenstände, d.h. ein informationstechnisch aufgerüstete Alltagsgegenstände, welcher einen Mehrwert durch sensorgestützte Informationsverarbeitung und Kommunikation erhält.

Nutzer umgeben sich im Alltag in immer höherem Maße mit elektronischen Geräten, welche Computerfunktionalität und -konnektivität aufweisen. Ein Trend ist die zunehmende Verbreitung von Wearables, d.h. Computersystemen, die während der Anwendung am Körper des Nutzers angeordnet sind. Ein weiterer Trend ist das Ersetzen von Gegenstände des Alltags durch "intelligente Gegenstände" (auch "smart devices" genannt), welche informationstechnisch aufgerüstete und dazu konfiguriert sind selbst Informationen zu verarbeiten. Diese intelligenten Gegenstände sind mit datenverarbeitender Hardware ausgerüstet, wie etwa einem eingebauten Mikrocontroller, Kommunikationsschnittstellen und/oder Sensoren, sodass sie Daten erfassen, speichern und/oder untereinander austauschen können. Ein Schlagwort für diese Entwicklung ist beispielsweise das sogenannte Internet der Dinge (abgekürzt auch IoT von "internet of things").

Merkmale, welche zu einer Authentifizierung eines Nutzers herangezogen und von dazu konfigurierten Sensoren erfasst werden können, können beispielsweise Daten sein, welche dem Nutzer zugordnet sind und/oder welche allein dem Nutzer bekannt sind oder einem Gegenstand, beispielsweise einem ID-Token entnehmbar sind, welchen der Nutzer besitzt. Solche Merkmale können beispielsweise Benutzername, Passwort, Einmalpasswort (dynamisch generiert oder einer Passwortliste bzw. TAN-Liste entnehmbar), Persönliche Identifikationsnummer (PIN), Kartennummer, Zeichenfolge, wie beispielsweise eine Antwort auf eine Sicherheitsfrage, Signatur, kryptographischer Schlüssel beispielsweise zusammen mit einem Zertifikat, Geräteidentifikator, eine IP-Adresse oder Universally Unique Identifier (UUID) eines Geräts sein.

Der Begriff "ID-Token" bezeichnet eine Vorrichtung, wie beispielsweise ein tragbares elektronisches Gerät, zum Beispiel einen sogenannten USB-Stick, eine Chipkarte, oder ein Dokument.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Ferner kann es sich bei einem Merkmal auch um ein biometrisches Merkmal handeln, wie beispielsweise Pulsfrequenz, Elektrokardiogramm-Signale, Elektroenzephalographie-Signale, spektrale Eigenschaften des menschlichen Gewebes, prozentuale Sauerstoffsättigung des Blutes, Blutfluss , Hämatokrit, biochemische Gewebeproben, elektrische Plethysmografie, Transpiration von Gasen, elektrische Eigenschaft der Haut, Blutdruck, Differenzialblutvolumen, Fingerabdruck, Unterschrift, Handschrift, Gesichtsgeometrie, Irismuster, Retina, Handgeometrie, Fingergeometrie, Venenstruktur der Hand, Ohrform, Stimme Klangfarbe, DNA, Geruch, Fußgeometrie, Gewicht, Länge der Extremitäten, Gestenmuster, Bewegungsmuster, Schrittmuster, Tippmuster, Streichmuster, Tastenanschlag.

Ferner kann es sich bei den Merkmalen um den Nutzer kennzeichnende Verhaltensmerkmale handeln, beispielsweise auf einem dem Nutzer zugeordneten Computer installierten Anwendungen, ein Synchronisationsmuster von dem Nutzer zugeordneten Computern und/oder Computeranwendungen, auf einem dem Nutzer zugeordneten Computer gespeicherten Kontakte, ein Nutzungsprofil eines Computers, ein Browsingmuster eines Nutzers mit einem Browser auf einem dem Nutzer zugeordneten Computer, Kontextinformationen wie etwa aus einem dem Nutzer zugeordneten elektronischen Kalender, ein Bewegungsprofil des Nutzer, ein Anrufmuster von Anrufen mittels eines dem Nutzer zugeordneten Telekommunikationsgeräts.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Ein Challenge-Response-Protokoll stellt ein sicheres Authentifizierungsverfahren auf Basis gemeinsamen bzw. geteilten Wissens da. Gemäß dem Challenge-Response-Protokoll schickt beispielsweise ein erster Teilnehmer einer zweiseitigen Kommunikation eine sogenannten Challenge (Aufforderung) an den zweiten Teilnehmer, die dieser lösen muss, um dadurch zu beweisen, dass ein bestimmtes Wissen verfügt, ohne dieses Wissen gegenüber Dritten preiszugeben. Nachdem der zweite Teilnehmer die Challenge gelöst hat, antwortet er mit einer Response (Antwort). Beispielsweise sendet der erste Teilnehmer als Challenge eine Zufallszahl N (Nonce) an den zweiten Teilnehmer. Der zweite Teilnehmer ergänzt diese Zufallszahl N um das gemeinsame Geheimnis, wendet eine kryptographische Hashfunktion oder Verschlüsselung auf diese Kombination an und sendet das Ergebnis als Response zurück an den ersten Teilnehmer. Der erste Teilnehmer, der sowohl die Zufallszahl als auch das gemeinsame geteilte Geheimnis und die verwendete Hashfunktion bzw. Verschlüsselung kennt, führt dieselbe Berechnung durch und vergleicht sein Ergebnis mit der Response. Sind das Ergebnis und die Response identisch, so hat sich der zweite Teilnehmer erfolgreich authentifiziert.

Ausführungsformen können den Vorteil haben, dass dynamischen Multifaktorauthentifizierung bereitstellen. Unter einer dynamischen Multifaktorauthentifizierung wird hier und im Folgenden eine Multifaktorauthentifizierung bei der die Art und Anzahl der Faktoren in Abhängigkeit von dem jeweils erforderlichen Authentifizierungsgrad für jede Authentifizierungsanfrage dynamisch festgelegt wird. Das Verfahren ist also in dem Sinne dynamisch, dass die Auswahl der für eine erfolgreiche Authentifizierung des Nutzers nachzuweisende Kombination von Merkmalen auf den Empfangen der Authentifizierungsanfrage hin erfolgt. Die Auswahl ist mithin nicht statisch vorgegeben, sondern erfolgt für jede Authentifizierungsanfrage individuell. Insbesondere kann die Auswahl für identische Authentifizierungsanfragen unterschiedlich sein. Dies erhöht die Sicherheit des Verfahren. Selbst wenn die bei einer ersten Authentifizierungsanfrage zur erfolgreichen Authentifizierung notwendigen Messwerte durch Diebstahl und/oder Manipulation in die Hände eines unberechtigten gelangen sollten, kann dieser sich selbst bei einer identischen Authentifizierungsanfrage nicht erfolgreich Authentifizieren, wenn sich die nachzuweisende Kombination von Merkmalen dynamisch ändert.

Ferner können Ausführungsformen den Vorteil haben, dass der für eine erfolgreiche Authentifizierung erforderliche Authentifizierungsgrad abhängig von der Authentifizierungsanfrage gewählt werden kann. Durch Variieren des ersten Schwellenwerts in Abhängigkeit von der Authentifizierungsanfrage variiert der erforderliche Authentifizierungsgrad. So kann beispielsweise für eine Authentifizierungsanfrage mit niedriger Sicherheitsanforderung ein niedrigerer erster Schwellenwert gewählt werden als für eine Authentifizierungsanfrage mit höherer Sicherheitsanforderung, für welche ein höherer erster Schwellenwert gewählt wird.

Die Authentifizierung eines Nutzers erfolgt somit nicht mehr absolut, d.h. der Nutzer wird nicht mehr mit (nahezu) absoluter Sicherheit authentifiziert, sondern vielmehr graduell. Der Nutzer muss sich somit für eine erfolgreiche Authentifizierung nur noch bis zu einem bestimmten Grad authentifizieren.

Ausführungsformen können dabei den Vorteil haben, dass Merkmale für die Authentifizierung gewählt und abgefragt werden können, welche zwar weniger signifikant für den Nutzer, dafür aber einfacher zu erfassen und/oder auszuwerten sind. Ferner kann eine Authentifizierung bei einem niedrigeren ersten Schwellenwert auch dann erfolgreich sein, wenn ein Messwert eines Merkmals ungenau erfasst wurde. Ein ungenauer Messwert führt zu einer geringeren Übereinstimmung mit dem hinterlegten Referenzwert und somit zu einem niedrigeren Authentifizierungsgrad. Im Falle eines niedrigeren ersten Schwellenwerts kann dieser Authentifizierungsgrad aber je nach Ausmaß der Ungenauigkeit immer noch ausreichend für eine erfolgreiche Authentifizierung sein. Dies erlaubt es beispielsweise auch auf ungenauere aber günstiger und technisch einfacher zu implementierende Sensoren zum Erfassen der Messwerte zurückzugreifen. Hinzukommt, dass in bestimmten Situationen beispielsweise kein hochsensibler Sensor zur Verfügung steht oder die Messgenauigkeit eines Sensors nachgelassen hat.

Beispielsweise kann der Authentifizierungsanfrage ein Kontext zugeordnet sein und der erste Schwellenwert kontextabhängig gewählt werden. Nach einer anderen Ausführungsform sind verschiede Kategorien vorgesehen, denen jeweils unterschiedliche erste Schwellenwert zugeordnet sind. Dabei wird derjenige erste Schwellenwert für die Authentifizierung gewählt, welcher der Kategorie zugeordnet ist, unter die die Authentifizierungsanfrage fällt.

Nach Ausführungsformen weist das ID-Provider-Computersystem ferner Mittel zum Schutz gegen unbefugte Manipulationen auf. Durch die Mittel zum Schutz gegen unbefugte Manipulationen wird durch technische Maßnahmen die Vertrauenswürdigkeit des ID-Provider-Computersystems, d.h. seine Funktion als "Vertrauensanker", gewährleistet. Beispielsweise wird das ID-Provider-Computersystem von einer vertrauenswürdigen Institution, wie z.B. durch ein Trust-Center (Trust Service Provider), konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des ID-Provider-Computersystems nicht modifiziert werden.

Nach einer Ausführungsform der Erfindung sind die Mittel zum Schutz des ID-Provider-Computersystems gegen unbefugte Manipulationen als ein so genanntes Tamper Proof Module oder Trusted Platform Module (TPM) ausgebildet, welches auch als Tamper Resistant Module (TRM) bezeichnet werden. Beispielsweise sind zumindest Teile des ID-Provider-Computersystems signiert, wie z.B. Programmkomponenten und/oder Hardwarekomponenten, die eine digitale Signatur tragen können. Insbesondere können das Betriebssystem, das Binary Input Output System (BIOS), eine Konfigurationsdatei und/oder ein Massenspeichermedium des ID-Provider-Computersystems digital signiert sein. Vor einer Nutzung des ID-Provider-Computersystems prüft das TRM dann, ob die Signatur bzw. die Signaturen, valide sind. Wenn eine der Signaturen nicht valide ist, sperrt das TRM die Nutzung des ID-Provider-Computersystems. Ein TPM umfasst Mikrokontroller nach der TCG-Spezifikation wie in ISO/IEC 11889, der einen Computer oder ähnliche Geräte um grundlegende Sicherheitsfunktionen erweitert.

Nach einer Ausführungsform der Erfindung beinhalten die Mittel zum Schutz des ID-Provider-Computersystems gegen unbefugte Manipulationen ferner mechanische Mittel, die z.B. das Öffnen des ID-Provider-Computersystems oder seiner Teile verhindern sollen, oder die bei dem Versuch eines Eingriffs in das ID-Provider-Computersystem dieses unbrauchbar machen, beispielsweise indem ein Datenverlust eintritt. Beispielsweise können hierzu sicherheitskritische Teile des ID-Provider-Computersystems in Epoxidharz eingegossen sein, wobei ein Versuch, eine betreffende Komponente aus dem Epoxidharz zu entfernen, zu einer unvermeidlichen Zerstörung dieser Komponente führt. Insbesondere können die Mittel zum Schutz des ID-Provider-Computersystems gegen unbefugte Manipulationen als ein so genanntes Hardware Security Modul (HSM) ausgebildet sein.

Nach Ausführungsformen wird das Authentifizierungsverfahren halbautomatisch oder vollautomatisch ausgeführt. Ein Authentifizierungsverfahren gilt als halbautomatisiert, wenn der sich authentisierende Nutzer keinerlei manuelle Dateneingabe vornehmen muss. Ein Authentifizierungsverfahren gilt als vollautomatisiert, wenn der sich authentisierende Nutzer keinerlei Handhabung mehr erledigen muss.

Nach Ausführungsformen erfolgt initial eine Registrierung des Nutzers gegenüber dem ID-Providersystem, zum Beispiel mithilfe eines ID-Token, wie etwa einem elektronischen Personalausweises. Hierbei können dem ID-Providersystem nach Ausführungsformen zudem Attribute des Nutzers zur Verfügung gestellt werden. Beispielsweise werden diese Attribute aus dem ID-Token ausgelesen oder von dem Nutzer eingegeben.

Nach Ausführungsformen umfasst das Verfahren, falls der bestimmte Authentifizierungsgrad über einem zweiten, nicht aber über dem ersten Schwellenwert liegt, ferner:
- Auswahl zumindest eines zusätzlichen Merkmals,
- Abfrage eines Messwerts des zusätzlichen Merkmals,
- Empfang des abgefragten Messwerts des zusätzlichen Merkmals,
- Vergleichen des empfangenen Messwerts des zusätzlichen Merkmals mit dem Referenzwert für das entsprechende Merkmal,
- Aktualisieren des Authentifizierungsgrads des Nutzers unter Verwendung des Grads der Übereinstimmungen zwischen dem Messwert und dem Referenzwert des zusätzlichen Merkmals,
- falls der aktualisierte Authentifizierungsgrad über dem ersten Schwellenwert liegt, Erzeugen und Senden des Authentisierungstokens zur Bestätigung einer erfolgreichen Authentifizierung des Nutzers.

Ausführungsformen können den Vorteil haben, dass im Falle eines für eine erfolgreiche Authentifizierung unzureichenden Authentifizierungsgrad durch eine Auswahl zusätzlicher Merkmale der Authentifizierungsgrad über den ersten Schwellenwert erhöht und damit das angestrebte Maß an Sicherheit erreicht werden kann, ohne dass das Authentifizierungsverfahren wiederholt werden muss. Somit können Fehler bei der Authentifizierung effizient gehandhabt werde. Entsprechende Fehler können beispielsweise aufgrund eines ungenauen Messergebnisses, eines Erfassens eines Messwerts für ein falsches Merkmal oder eines Nichterfassen eines abgefragten Merkmals auftreten.

Ausführungsformen können ferner den Vorteil haben, dass nur bei Überschreiten des zweiten Schwellenwerts zusätzliche Merkmale abgefragt werden. Somit kann verhindert werden, dass durch ein Eingeben bzw. Bereitstellen falscher Merkmale systematisch ausgetestet werden kann, welche Merkmale tatsächlich zur Authentifizierung herangezogen werden. Eine unberechtigte Person, welche beispielsweise die Authentifizierung zu manipulieren versucht, erfährt bei einem erfolglosen Authentifizierungsversuch gar nicht erst, welche zusätzlichen Merkmale das Verfahren berücksichtigt und beispielsweise bei einer nächsten Authentifizierungsanfrage abfragen könnte. Ein solches systematisches Ausspähen kann durch Einführung des zweiten Schwellenwerts verhindert werden. Ein Bereitstellen beliebiger und/oder keiner Merkmale, wodurch der zweite Schwellenwert unterschritten wird, führt beispielsweise zu einem Abbruch des Authentifizierungsverfahrens. Solange jedoch zumindest ein minimaler Authentifizierungsgrad, welcher über dem zweiten Schwellenwert liegt, erreicht zielt wird, wird es dem Nutzer ermöglicht sich durch den Nachweis zusätzlicher Merkmale erfolgreich zu authentifizieren.

Nach Ausführungsformen entspricht der zweite Schwellenwert einem Authentifizierungsgrad von Null, d.h. bei einem Unterschreiten des ersten Schwellenwerts kommt es stets zur Auswahl zumindest eines zusätzlichen Merkmals.

Nach Ausführungsformen werden solange zusätzliche Merkmale ausgewählt und ausgewertet, bis der erste Schwellenwert überschritten wird.

Nach Ausführungsformen umfasst das Verfahren, falls der bestimmte Authentifizierungsgrad über dem zweiten, aber nicht über dem ersten Schwellenwert liegt, ferner: Erhöhen des ersten Schwellenwerts. Ausführungsformen können den Vorteil haben, dass eine unzureichender Authentifizierungsgrad auf einen Manipulationsversuch hindeuten kann. Eine effiziente Gegenmaßnahme hiergegen kann eine Erhöhung des ersten Schwellenwerts und die damit einhergehende Erhöhung der Sicherheit darstellen.

Nach einer Ausführungsform umfasst das Verfahren, falls der bestimmte Authentifizierungsgrad unter Berücksichtigung des zusätzlichen Merkmals über dem zweiten, aber nicht über dem ersten Schwellenwert liegt, ferner: Erhöhen des zweiten Schwellenwerts.

Nach Ausführungsformen umfasst das Verfahren, falls eine vorbestimmte maximale Anzahl zusätzlicher Merkmale erreicht ist, ferner: Abbrechen des Authentifizierungsverfahren. Ausführungsformen können den Vorteil haben, dass ein systematisches Ausspähen derjenigen Merkmale unterbunden wird, die für eine Authentifizierung herangezogen werden.

Nach Ausführungsformen wird der erste Schwellenwert durch die Authentifizierungsanfrage vorgegeben. Ausführungsformen können den Vorteil haben, dass somit in effizienter Weise eine Abhängigkeit des ersten Schwellenwerts von Authentifizierungsanfrage implementiert werden kann. Nach Ausführungsformen gibt die Authentifizierungsanfrage eine Kategorie an, wobei die Kategorie aus einer Vielzahl von Kategorien ausgewählt wurde, denen jeweils ein erster Schwellenwert zugeordnet ist.

Nach Ausführungsformen werden die zur Abfrage von Messwerten zur Verfügung stehenden Sensoren erfasst und die Auswahl der Merkmale erfolgt in Abhängigkeit von den erfassten Sensoren. Ausführungsformen können den Vorteil haben, dass die Auswahl der Merkmale an die zur Verfügung stehenden Sensoren angepasst wird kann. Stehen in einer bestimmten Situation nicht alle bekannten Sensoren zur Verfügung, so werden nur Merkmale ausgewählt, für welche auch tatsächlich Messwerte erfasst werden können.

Beispielsweise werden alle für eine Authentifizierung zur Verfügung stehenden Sensoren zunächst registriert. Beispielsweise können sich Instanzen bzw. Computersysteme, für die der Nutzer authentifiziert werden soll, registrieren. Bei der Registrierung können diese Instanzen angeben, welche Merkmale sie für eine erfolgreiche Authentifizierung akzeptieren und/oder wie hoch der erste Schwellenwert für Authentifizierungsanfragen sein soll, welche der entsprechenden Instanz zugeordnet sind. Zudem kann angegeben werden, wie hoch der zweite Schwellenwert für Authentifizierungsanfragen sein soll, welche der entsprechenden Instanz zugeordnet sind.

Nach Ausführungsformen ist der Authentifizierungsanfrage ein Kontext zugeordnet und die Auswahl der Merkmale erfolgt aus einer dem Kontext zugeordneten Vorauswahl von Merkmalen. Ausführungsformen können den Vorteil haben, dass in einer einem bestimmten Kontext zugeordneten typischen Authentifizierungssituation voranging eine bestimmte Auswahl von Merkmale und/oder Sensoren zur Erfassung einer bestimmten Auswahl von Merkmalen zur Verfügung stehen. Diese möglicherweise besonders effizient und sicher zu erfassenden kontextabhängigen Merkmale können als Vorauswahl von Merkmalen herangezogen werden, aus welchen die tatsächliche Auswahl von Merkmalen erfolgt.

Nach Ausführungsformen wird die Auswahl der Merkmale durch die Authentifizierungsanfrage vorgegeben. Ausführungsformen können den Vorteil haben, dass der Auftraggeber der Authentifizierung die Auswahl der zu prüfenden Merkmale treffen kann, auf Basis derer eine Authentifizierung akzeptiert wird.

Nach Ausführungsformen ist den Merkmalen, für welche die Datenbank Referenzwerte bereitstellt, jeweils ein Signifikanzwert zugeordnet, wobei die Bestimmung des Authentifizierungsgrads unter Verwendung der Signifikanzwerte der ausgewählten Merkmale erfolgt und wobei die Auswahl der für eine erfolgreiche Authentifizierung des Nutzers nachzuweisende Kombination von Merkmalen so erfolgt, dass die Signifikanzwerte einen zum Erreichen des ersten Schwellenwerts notwendigen Signifikanzschwellenwert überschreiten. Ein Signifikanzwert gibt an wie signifikant ein Merkmal für einen Nutzer ist, d.h. wie gut es den nutzergegenüber anderen Nutzern unterschiedet und somit zu einer Authentifizierung beitragen kann. Ausführungsformen können den Vorteil haben, dass bei der Bestimmung des Authentifizierungsgrads nicht allein der Grad der Übereinstimmung zwischen den Messwerten und den Referenzwerten ausschlaggebend ist. Beispielsweise könnten alle Messwerte der Merkmale vollständig mit den zugeordneten Referenzwerten übereinstimmen, ohne dass diese den Nutzer tatsächlich klar authentifizieren würde, falls die Merkmale jeweils nur eine geringe Signifikanz für den Nutzer besitzen und nicht dazu geeignet sind, diesen klar und eindeutig von anderen Nutzern zu unterscheiden,

Ausführungsformen können ferner den Vorteil aufweisen, dass die Signifikanzwerte einen zum Erreichen des ersten Schwellenwerts notwendigen Signifikanzschwellenwert überschreiten. Der Signifikanzschwellenwert kann so gewählt sein, dass die unter typischen Umständen zu erwartenden Übereinstimmungen zwischen Messwerten und Referenzwerten ausreichen, damit der daraus bestimmte Authentifizierungsgrad auch tatsächlich den ersten Schwellenwert überschreitet, falls der sich authentisierende Nutzer auch tatsächlich mit dem zu authentifizierenden Nutzer übereinstimmt. Dies kann insbesondere zu einer Steigerung der Effizienz des Authentifizierungsverfahrens beitragen, da zusätzliche Verfahrensschritte zur Authentifizierung vermieden bzw. deren Anzahl erheblich reduziert werden.

Nach Ausführungsformen kann der Signifikanzwert eines Merkmals von den weiteren Merkmalen der zur Authentifizierung ausgewählten Kombination von Merkmalen abhängig sein.

Nach Ausführungsformen sind die Merkmale gemäß ihrem jeweiligen Signifikanzwert in Signifikanzklassen eingeteilt und die Auswahl der Merkmale erfolgt nach Signifikanzklassen, wobei die Anzahl der aus den einzelnen Signifikanzklassen jeweils auszuwählenden Merkmale und/oder die Auswahl der Merkmale innerhalb der einzelnen Signifikanzklassen zufällig erfolgt. Ausführungsformen können den Vorteil haben, dass somit einerseits sichergestellt werden kann, dass die Signifikanz der ausgewählten Merkmale bei einer unter regulären Bedingungen zu erwartenden Übereinstimmung zwischen Messwerten und Referenzwerten für eine Überschreitung des ersten Schwellenwerts ausreicht. Andererseits kann durch eine zufällige Auswahl der konkreten Merkmale, ebenso wie deren Anzahl, die Sicherheit des Verfahren gesteigert, das für einen Angreifer, welcher das Verfahren zu manipulieren versucht, nicht vorherzusagen ist, welche Merkmale bei einer bestimmten Authentifizierungsanfrage tatsächlich abgefragt werden.

Nach Ausführungsformen erfolgt die Auswahl der Merkmale so, dass zumindest ein Merkmal aus einer vorbestimmten Signifikanzklasse ausgewählt wird. Ausführungsformen können den Vorteil haben, dass beispielsweise sichergestellt werden kann, dass zumindest eines der abgefragten Merkmale aus einer hohen Signifikanzklasse umfasst. Dies kann den Vorteil haben, dass die Anzahl der ausgewählten Merkmale gering ist und die Ausführung des Verfahrens damit beschleunigt wird, da zum Erreichen eines für eine erfolgreiche Authentifizierung notwendigen Authentifizierungsgrad in diesem Fall nur noch ein Nachweis wenige weitere Merkmale notwendig ist.

Nach Ausführungsformen beträgt die Anzahl der ausgewählten Merkmale mindestens drei. Ausführungsformen können den Vorteil haben, dass durch die Verwendung einer mindestens Drei-Faktoren-Authentifizierung die Sicherheit des Verfahrens erhöht wird. Für erfolgreiche Manipulation des Authentifizierungsverfahrens müsste es einem Angreifer gelingen sich aller drei Faktoren zu bemächtigen, was hohe Herausforderung darstellt.

Nach Ausführungsformen ist die Anzahl der ausgewählten Merkmale kleiner als eine vorbestimmte Maximalanzahl. Ausführungsformen können den Vorteil haben, dass die Anzahl der nachzuweisenden Merkmale nicht zu groß wird, da dies dazu führen kann, dass das Verfahren zu umständlich und zeitaufwendig wird.

Nach Ausführungsformen umfasst das Verfahren, falls der bestimmte Authentifizierungsgrad unter dem zweiten Schwellenwert liegt, ferner: Abbrechen des Authentifizierungsverfahren. Ausführungsformen können den Vorteil haben, dass durch den Abbruch unnötige zusätzliche Verfahrensschritte vermieden werden können, wenn sich bereits aufgrund der Auswertung der ersten Merkmalskombination ergibt, dass es sich bei dem sich authentisierenden Nutzer mit hoher Wahrscheinlichkeit nicht um den zu authentifizierenden Nutzer handelt. Zudem kann somit ein systematisches Ausspähen der für eine Authentifizierung abgefragten Merkmale verhindert werden.

Nach Ausführungsformen werden die Messwerte von einem dem Nutzer zugeordneten Sensorgerät abgefragt. Ausführungsformen können den Vorteil haben, dass ein solcher Messwert eine hohe Signifikanz besitzen kann, da typischerweise nur der Nutzer im Besitz des entsprechenden Sensorgerätes ist und dessen Verwendung überwacht. Mithin sind durch das Sensorgerät erfasste Messwerte mit sehr hoher Wahrscheinlichkeit auch tatsächlich dem Nutzer zuzuordnen. Beispielsweise kann es sich bei einem solchen Sensorgerät um ein Smartphone des Nutzers handeln.

Nach Ausführungsformen werden die Messwerte von einer Mehrzahl von unterschiedlichen Sensorgeräten abgefragt. Ausführungsformen können den Vorteil haben, dass somit ein schwer zu manipulierendes Authentifizierungsverfahren implementiert werden kann, da ein Angreifer für eine erfolgreiche Manipulation Zugriff auf alle Sensorgeräte besitzen müsste.

Nach Ausführungsformen erfolgt die Authentifizierungsanfrage durch ein dem Nutzer zugeordnetes Nutzer-Computersystem. Ausführungsformen können den Vorteil haben, dass der Nutzer die Authentifizierungsanfrage stellen und beispielsweise vorgeben kann, welchen Authentifizierungsgrad und/oder welche Merkmale er für die Authentifizierung nutzen möchte. Diese Auswahl kann beispielsweise darauf beruhen, welche Merkmale und/oder Sensoren zum Erfassen der Messwerte dem Nutzer in einer konkreten Situation zur Verfügung stehen.

Nach Ausführungsformen gibt das Authentisierungstoken die zur Bestimmung des Authentifizierungsgrad verwendeten Merkmale an. Somit kann der finale Empfänger des Authentifizierungstokens gegenüber dem sich der Nutzer authentifizieren möchte selbständig bestimmen, ob er die nachgewiesenen Merkmale für hinreichend ansieht und den entsprechende Auswahl bestätigt.

Nach Ausführungsformen erfolgt die Authentifizierungsanfrage durch ein einem Dienstanbieter zugeordnetes Dienst-Computersystem. Ausführungsformen können den Vorteil haben, dass das ein Dienstanbieter, welchem das Dienst-Computersystem zugeordnet ist, die Authentifizierungsanfrage stellen und beispielsweise vorgeben kann, welchen Authentifizierungsgrad und/oder welche Merkmale er für eine erfolgreiche Authentifizierung verlangt.

Nach Ausführungsformen gibt das Authentisierungstoken den bestimmten Authentifizierungsgrad an. Ausführungsformen können den Vorteil haben, dass der finale Empfänger des Authentifizierungstokens, gegenüber dem sich der Nutzer authentifizieren möchte, selbständig bestimmen, ob den bestimmten Authentifizierungsgrad für hinreichend erachtet.

Nach Ausführungsformen handelt es sich bei zumindest einem der Referenzwerte um einen Erwartungswert, welcher auf Basis eines dem Nutzer zugeordneten prädiktiven Modells bestimmt wurde. Ausführungsformen können den Vorteil haben, dass auf Basis des Verhaltens des Nutzers in der Vergangenheit ein für den Nutzer charakteristisches Verhaltensprofil erstellt werden kann, welches als prädiktives Model genutzt werden kann. Dieses prädiktive Model stellt Erwartungswerte für Verhaltensmerkmale des Nutzers bereit, die als Referenzwerte genutzt werden können, um zu prüfen, ob der Nutzer das für ihn zu erwartende charakteristische Verhalten zeigt. Der Nutzer kann sich beispielweise zu einer bestimmten Uhrzeit für gewöhnlich an einem bestimmten Ort aufhalten und bestimmte Tätigkeiten ausführen.

Nach Ausführungsformen werden mehr Merkmale als zum Überschreiten des ersten Schwellwerts notwendig sind ausgewählt, wobei das Empfangen der abgefragten Merkmale, dass Vergleichen mit den Referenzwerten und das Bestimmen des Authentifizierungsgrads sukzessive für ein ausgewähltes Merkmal nach dem anderen erfolgt und bei Überschreiten des ersten Schwellwerts beendet wird. Ausführungsformen können den Vorteil haben, dass dem Nutzer die Möglichkeit geboten wird aus der abgefragten Auswahl von Merkmalen selbst Auszuwählen, welche Merkmale er nachweisen möchte. Hierbei wird der Nutzer beispielsweise vorlaufend über den Fortgang der Bestimmung des Authentifizierungsgrads informiert. Beispielsweise wird dem Nutzer durch einen Balken und/oder einen Farbcode angezeigt, wie weit die Bestimmung des Authentifizierungsgrads fortgeschritten ist und ob noch weitere Merkmale aus der Auswahl nachzuweisen sind.

Nach Ausführungsformen umfasst die Auswahl nur eine Angabe dazu wieviel Merkmale aus welcher Signifikanzklasse nachzuweisen sind. Ausführungsformen können den Vorteil haben, dass es dem Nutzer überlassen bleibt zu entscheiden welche konkreten Merkmale aus den vorgegebenen Signifikanzklassen er nachweist.

Ausführungsformen umfassen ferner ein Computerprogrammprodukt, insbesondere ein computerlesbares, nichtflüchtiges Speichermedium, mit ausführbaren Programminstruktionen zum Ausführen eines Verfahrens nach einer der zuvor genannten Ausführungsformen.

Ausführungsformen umfassen ferner ein Computersystem, welches konfiguriert ist zum Ausführen eines Verfahren nach einer der zuvor genannten Ausführungsformen. Nach Ausführungsformen ist das Computersystem einem zentralen ID-Provider-Computersystemservice zugeordnet. Nach Ausführungsformen ist die Datenbank in einem geschützten Speicherbereich eines Speichers eines dem Nutzer zugeordneten tragbaren Computersystem gespeichert. Nach Ausführungsformen umfasst, dass ID-Provider-Computersystemservice die Datenbank oder die Datenbank wird dem ID-Provider-Computersystemservice zentral zur Verfügung gestellt.

Ausführungsformen können den Vorteil haben, dass das Authentifizierungsverfahren und der damit verbundene möglicherweise hohe rechenaufwand zentral ausgeführt wird. Ausführungsformen können den Vorteil haben, dass der Energieverbrauch beim Ausführen des Authentifizierungsverfahrens weniger strikt kontrolliert werden muss, da kaum eine Gefahr besteht, dass aufgrund einer leeren Batterie das Verfahren unter- und/oder abgebrochen wird. Ferner kann die Gefahr eines Datenverlustes durch eine zentrale Speicherung verringert werden.

Nach Ausführungsformen handelt es sich bei dem Computersystem um ein dem Nutzer zugeordnetes tragbares System mit einer Kommunikationsschnittstelle zum mobilen Datenaustausch, welches einen Speicher mit einem geschützten Speicherbereich umfasst, in welchem die Datenbank gespeichert ist. Ausführungsformen können den Vorteil haben, dass das der Nutzer die Hoheit über seine Daten behält und selbst entscheiden kann, wer in welchem Umfang zu welchen Zwecken auf diese zugreifen darf.

Im Weiteren werden Ausführungsformen der Erfindung mit Bezugnahme auf die Zeichnungen näher erläutert. Es zeigen:
- Figur 1: ein Blockdiagramm einer ersten Ausführungsform exemplarischer Computersysteme,
- Figur 2: ein Blockdiagramm einer zweiten Ausführungsform exemplarischer Computersysteme,
- Figur 3: ein Blockdiagramm einer dritten Ausführungsform exemplarischer Computersysteme,
- Figur 4: ein Flussdiagramm einer ersten Ausführungsform eines exemplarischen Verfahrens,
- Figur 5: ein Flussdiagramm einer zweiten Ausführungsform eines exemplarischen Verfahrens,
- Figur 6: ein Flussdiagramm einer dritten Ausführungsform eines exemplarischen Verfahrens und
- Figur 7: ein Flussdiagramm einer vierten Ausführungsform eines exemplarischen Verfahrens.

Elemente der nachfolgenden Ausführungsformen, die einander entsprechen, werden mit denselben Bezugszeichen gekennzeichnet.

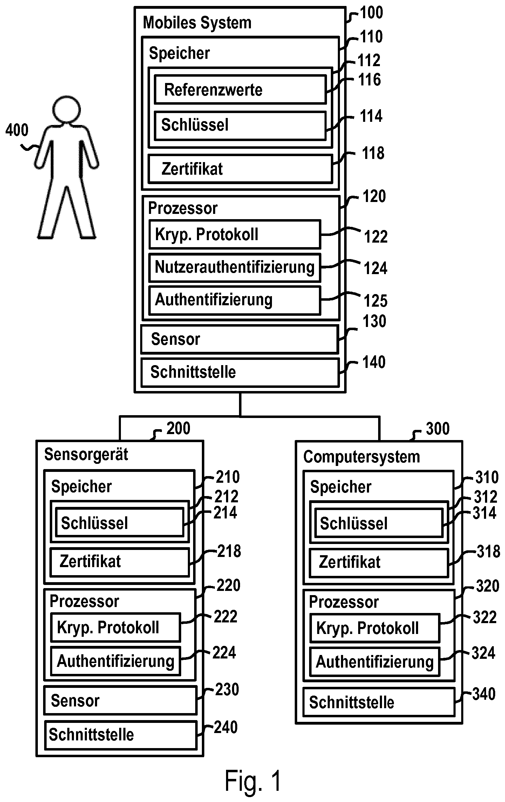

Die Figur 1 zeigt ein mobiles Kommunikationssystem 100 eines Nutzers 400, welches dazu konfiguriert ist als ID-Provider zu dienen und einen Authentifizierungstoken zu erzeugen, welcher eine erfolgreiche Authentifizierung des Nutzers 400 bestätigt. Bei dem mobilen Kommunikationssystem 100 kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Das mobile Kommunikationssystem 100 hat eine Schnittstelle 140 zur Kommunikation mit einem oder mehreren externen Sensorgeräten 200, welche jeweils eine entsprechende Schnittstelle 240 aufweisen. Die Kommunikation kann kabellos oder über ein Kabel erfolgen. Bei einer kabellosen Verbindung kann es sich insbesondere um eine Nahfeldkommunikation, beispielsweise mittels RFID, Bluetooth oder WLAN handeln. Beispielsweise erfolgt die Kommunikation entsprechend der Norm ISO 14443 drahtlos mit einer Frequenz von 13,56 MHz. Beispielsweise erfolgt die Kommunikation über ein Netzwerk, bei dem es sich um ein öffentliches Computernetzwerk, wie etwa das Internet, oder ein Intranet handeln kann. Ferner kann die Schnittstelle 140 zur Kommunikation mit einer entsprechenden Schnittstelle 340 eines Computersystems 300 konfiguriert sein. Die Kommunikation kann auf dieselbe Weise wie mit dem Sensorgerät 200 oder nach einem anderen der zuvor genannten Verfahren erfolgen.

Das mobiles Kommunikationssystem 100 umfasst zumindest einen Prozessor 120 zur Ausführung von Programminstruktionen 124. Die Programminstruktionen 124 dienen zur Nutzerauthentifizierung, d.h. zur Authentifizierung des Nutzers 400 durch das mobiles Kommunikationssystem 100. Das mobile Kommunikationssystem 100 umfasst ferner einen elektronischen Speicher 110 mit einem geschützten Speicherbereich 112. Der geschützte Speicherbereich 112 dient zur Speicherung einer Datenbank mit Referenzwerten 116, die zur Authentifizierung des Nutzers 400 durch das mobile Kommunikationssystem 100 dienen. Der geschützte Speicherbereich 112 dient ferner zur Speicherung eines privaten Schlüssels 114, welcher dem mobilen Kommunikationssystem 100 zugeordnet ist.

In dem elektronische Speicher 110 kann ferner ein Zertifikat 118 gespeichert sein. Das Zertifikat 118 beinhaltet einen öffentlichen Schlüssel, der dem in dem geschützten Speicherbereich 112 gespeicherten privaten Schlüssel 114 zugeordnet ist. Das Zertifikat 118 kann nach einem Public Key Infrastruktur (PKI) Standard erstellt worden sein, beispielsweise nach dem X.509 Standard.

Durch Ausführung der Programminstruktionen 124 erfolgt auf den Empfang einer Authentifizierungsanfrage hin, beispielsweise von dem Computersystem 300, eine Auswahl einer für eine erfolgreiche Authentifizierung des Nutzers 400 nachzuweisende Kombination von Merkmalen, für welche von den Sensoren 130 und 230 des mobilen Kommunikationsgeräts 100 bzw. des Sensorgeräts 200 Messwerte abgefragt werden. Die empfangenen Messwerte werden mit den Referenzwerten 116 in dem geschützten Speicherbereich 112 verglichen und ein Authentifizierungsgrad des Nutzers 400 bestimmt. Falls der bestimmte Authentifizierungsgrad über einem ersten Schwellenwert für eine erfolgreiche Authentifizierung liegt, wird durch das mobile Kommunikationsgerät 100 ein Authentisierungstoken zur Bestätigung der erfolgreichen Authentifizierung des Nutzers 400 erzeugt.

Die Vertrauenswürdigkeit des mobilen Kommunikationssystem 100 kann durch ein Sicherheitsmodul zusätzlich erhöht werden. Ein solches Sicherheitsmodul des mobilen Kommunikationssystems 100 kann beispielsweise als TPM ausgebildet sein. Alternativ oder zusätzlich kann das mobile Kommunikationssystem 100 teilweise oder insgesamt als HSM ausgebildet sein.

Nach Ausführungsformen können die Sensoren 130, 230 beispielsweise zur Erfassung eines biometrischen Merkmals des Nutzers 400 konfiguriert sein, insbesondere zu einer vollautomatischen Erfassung. Bei dem biometrischen Merkmal kann es sich beispielsweise um ein Beschleunigungsmuster, Herzschlagfrequenz, Venenmuster, Irismuster, Retinamuster, Stimmenmuster, Gangmuster, Tastaturdynamik, Unterschriftmuster, Berührungsmuster bei der Handhabung und/oder Fingerabdruck. Hierzu handelt es sich bei einem der Sensoren 130, 230 des mobilen Kommunikationsgeräts 100 und/oder des Sensorgeräts 200 beispielsweise um einen Beschleunigungssensor, Pulsmesser, Berührungssensor, beispielsweise in Form eines Touchscreens, und/oder einen Fingerabdrucksensor, welcher vorzugsweise in einem Bereich angeordnet ist, in dem bei einer bestimmungsgemäßen Verwendung des mobilen Kommunikationsgeräts 100 bzw. des Sensorgeräts 200 üblicherweise ein Finger des Nutzers 400 aufgelegt wird.

Nach Ausführungsformen können die Sensoren 130, 230 als Nutzerschnittstellen zum Empfang von eingaben des Nutzers als Messwerte konfiguriert sein. Nach weiteren Ausführungsformen können die Sensoren 130, 230 zum Überwachen und Protokollieren von Zuständen und/oder Zustandsänderungen von dem Nutzer zugeordneten Computersystemen konfiguriert sein. Nach Ausführungsformen können die Sensoren 130, 230 zum Erfassen einer Position und/oder Uhrzeit konfiguriert sein.

Die von dem Sensor 230 erfassten Messwerte werden durch Ausführung der Programminstruktionen 124 beispielsweise über einen kryptographisch gesicherten Kommunikationskanal von dem entsprechenden Sensorgerät 200 an das mobile Kommunikationssystem 100 übertragen und mit in dem geschützten Speicherbereich 112 gespeicherten Referenzwerten 116 verglichen.

Die Authentifizierung des Sensorgeräts 200 erfolgt durch Ausführen der Programminstruktionen 125 seitens des mobilen Kommunikationssystems 100 und der Programminstruktionen 224 seitens des Sensorgeräts 200. Zur gesicherten Datenübertragung weist das mobile Kommunikationssystem 100 ein kryptographischen Protokoll 122 auf, beispielsweise zum Ausführen eines Challenge-Response-Protokoll basierend auf einem symmetrischen Schlüssel oder einem asymmetrischen Schlüsselpaar. Das Sensorgerät 200 weist ein entsprechendes kryptographisches Protokoll 222 auf, ebenso wie das Computersystem 300 mit dem kryptographischen Protokoll 322.

Das Sensorgerät 200 umfasst ferner eine Schnittstelle 240 zur Kommunikation mit der Schnittstelle 140 des mobilen Kommunikationssystems 100. Zudem umfasst das Sensorgerät 200 einen Speicher 210, in welchem ein dem Sensorgerät 200 zugeordneter privater Schlüssel 214 sowie ein entsprechendes Zertifikat 218 gespeichert ist. Der private Schlüssel 214 ist vorzugsweise in einem geschützten Speicherbereich 212 des Speichers 210 gespeichert. Auch bei diesem Zertifikat 218 kann es sich beispielsweise um ein Zertifikat nach einem PKI-Standard, wie zum Beispiel X.509 handeln.

Darüber hinaus umfasst das Sensorgerät 200 zumindest einen Prozessor 220 zur Ausführung von Programminstruktionen 224. Durch Ausführung der Programminstruktionen 224 erfolgt die Authentifizierung des Sensorgeräts 200 gegenüber dem mobilen Kommunikationssystem 100 unter Verwendung des kryptographischen Protokolls 222.

Durch erfolgreiche Ausführung der Programminstruktionen 324 unter Verwendung des kryptographischen Protokolls 322 erfolgt eine Authentifizierung des Computersystems 300 gegenüber dem mobilen Kommunikationssystem 100.

Eine Datenübertragung zwischen dem mobilen Kommunikationssystem 100 und dem Sensorgerät 200 kann ebenso wie eine Datenübertragung zwischen dem mobilen Kommunikationssystem 100 und dem Computersystem 300 mittels Ende-zu-Ende-Verschlüsselung gesichert sein. Für die Ende-zu-Ende-Verschlüsselung kann ein symmetrischer Schlüssel verwendet werden, der beispielsweise anlässlich der Ausführung der kryptographischen Protokolle 122 und 222 bzw. 322 zwischen dem mobilen Kommunikationssystem 100 und Seensorgeräten 200 bzw. dem Computersystem 300 vereinbart wird. Prinzipiell kann jedes vorbekannte Verfahren zur Vereinbarung des symmetrischen Schlüssels für die Ende-zu-Ende-Verschlüsselung verwendet werden, wie zum Beispiel ein Diffie-Hellman-Schlüsselaustausch. Für die Schlüsselverteilung kann beispielsweise ein asymmetrisches Verschlüsselungsverfahren verwendet werden. Unter Verwendung einer hybriden Verschlüsselung wählt beispielsweise entweder das mobile Kommunikationssystem 100 oder dem Sensorgerät 200 bzw. dem mobilen Kommunikationssystem 100 einen zufälligen symmetrischen Schlüssel zum symmetrischen Verschlüsseln von zu schützenden Daten aus, welche über eine Ende-zu-Ende-verschlüsselte Verbindung übertagen werden sollen. Zur sicheren Übertragung an die andere Partei wird der symmetrische Schlüssel mit einem öffentlichen Schlüssel des Empfängers verschlüsselt, sodass dieser den symmetrischen Schlüssel mit einem dem öffentlichen Schlüssel zugeordneten privaten Schlüssel nach Empfang entschlüsseln kann.

Bei dem Computersystem 300 kann es sich beispielsweise um ein Dienst-Computersystem eines Dienstanbieters oder um ein einen Nutzercomputer des Nutzer 400 handeln. Je nach der Art des beauftragten oder bestellten Produkts, der Dienstleistung oder nachgefragten Funktionalität verlangt das Computersystem 300 eine Authentifizierung des Nutzers 400 mit einem von dem zu erzielenden Sicherheitsniveau abhängigen Authentifizierungsgrad. Nur wenn diese Authentifizierung erfolgreich durchgeführt und beispielsweise mittels eines entsprechenden Authentifizierungstokens bestätigt wurde, wird eine Anfrage des Nutzers 400 entgegengenommen und/oder ausgeführt. Um ein entsprechendes Authentifizierungstoken zu erlangen sendet das Computersystem 300 eine Authentifizierungsanfrage an das mobile Kommunikationssystem 100.

Beispielsweise kann es für eine Sicherheitskontrolle am Flughafen erforderlich sein, dass der Nutzer 400 seine Identität gegenüber dem Computersystem 300 offenbart, welches den Zutritt zum Gate kontrolliert, und dass diese Identität überprüft wird. Im Stand der Technik muss der Nutzer 400 hierzu beispielsweise seinen Personalausweis vorlegen. Dieser Vorgang wird durch das Bereitstellen der digitalen Identität des Nutzers 400 mittels des mobilen Kommunikationssystems 100 ersetzt. Nach erfolgreicher Authentifizierung des Nutzers 400 erzeugt das mobile Kommunikationssystems 100 einen Authentifizierungstoken, welcher die erfolgreiche Authentifizierung des Nutzers 400 durch das mobiles Kommunikationssystems 100 bestätigt und dessen Identität, z.B. Namen, angibt. Entsprechende Attribute, wie etwa der Name des Nutzers 400 sind beispielsweise in dem geschützten Speicherbereich 112 des Speichers 110 gespeichert.

Je nach Anwendungsfall muss der Nutzer 400 aber nicht seine Identität gegenüber dem Computersystem 300 offenbaren, sondern es reicht die Mitteilung beispielsweise eines einzelnen Attributs aus. Beispielsweise kann der Nutzer 400 über ein in dem geschützten Speicherbereich 112 gespeichertes Attribute einen Nachweis erbringen, dass er zu einer bestimmten Personengruppe gehört, die zugriffsberechtigt für eine von dem Computersystem 300 bereitgestellte Funktionalität ist. Beispielsweise kann ein solches Kriterium die Zugehörigkeit des Nutzers 400 zu einem Personenkreis sein, der zugangsberechtigt zu einem gesicherten Bereich ist, zu welchem der Zutritt durch das Computersystem 300 kontrolliert wird.

Zur Inanspruchnahme eines von dem Computersystem 300 zur Verfügung gestellten Dienstes oder zur Freigabe eines von dem Computersystem 300 kontrollierten Zutritts wird beispielsweise wie folgt vorgegangen:

### 1. Authentifizierung des Computersystems 300 gegenüber dem mobilen Kommunikationssystem 300.

Hierzu wird eine Verbindung zwischen dem mobilen Kommunikationssystem 100 und dem Computersystem 300 beispielsweise hergestellt. Beispielsweise überträgt das Computersystem 300 sein Zertifikat 318 an das mobile Kommunikationssystem 100. Durch Ausführen des kryptographische Protokolls 122 wird dann durch das mobile Kommunikationssystem 100 eine so genannte Challenge generiert, d.h. beispielsweise eine Zufallszahl. Diese Zufallszahl wird mit dem in dem Zertifikat 318 beinhalteten öffentlichen Schlüssel des Computersystems 300 verschlüsselt. Das resultierende Chiffrat wird von dem mobilen Kommunikationssystem 100 über die Verbindung an das Computersystem 300 gesendet. Durch Ausführen des kryptographische Protokolls 322 entschlüsselt das Computersystem 300 das Chiffrat mit Hilfe seines dem öffentlichen Schlüssel des Zertifikats 318 zugeordneten privaten Schlüssels 314 und erhält so die Zufallszahl. Die Zufallszahl sendet das Computersystem 300 an das mobiles Kommunikationssystem 100 zurück. Durch Ausführung des Protokolls 122 wird dort geprüft, ob die von dem Computersystem 300 empfangene Zufallszahl mit der ursprünglich generierten Zufallszahl, d.h. der Challenge, übereinstimmt. Ist dies der Fall, so gilt das Computersystem 300 als gegenüber dem mobilen Kommunikationssystem 100 authentifiziert. Die Zufallszahl kann als symmetrischer Schlüssel für eine Ende-zu-Ende-Verschlüsselung verwendet werden. Nach Ausführungsformen umfasst das Verfahren zudem eine Authentifizierung des mobilen Kommunikationssystems 100 durch das Computersystem 300, beispielsweise unter Verwendung des Zertifikats 118 und des zugeordneten privaten Schlüssels 114. Die Authentifizierung des mobilen Kommunikationssystems 100 kann beispielsweise analog zu der Authentifizierung des Computersystems 300 erfolgen.

### 2. Authentifizierung des Nutzers 400 durch das mobile Kommunikationssystem 100.

Das Computersystems 300 sendet eine Authentifizierungsanfrage an das mobile Kommunikationssystem 100. Der Nutzer 400 wird daraufhin durch das mobile Kommunikationssystem 100 authentifiziert. Hierzu wird eine für eine erfolgreiche Authentifizierung des Nutzers 400 nachzuweisende Kombination von Merkmalen ausgewählt. Diese Auswahl kann beispielsweise durch die Authentifizierungsanfrage vorgegeben bzw. eingeschränkt sein. Insbesondere kann die Authentifizierungsanfrage einen Schwellenwert vorgeben, den ein Authentifizierungsgrad des Nutzers 400 für eine erfolgreiche Authentifizierung erfüllen muss. Dieser Authentifizierungsgrad kann beispielsweise auch aus einem Kontext der Authentifizierungsanfrage abgeleitet werden. Dabei richtet sich der zu erzielende Authentifizierungsgrad nach dem Maß an Sicherheit, welches die Authentifizierung des Nutzers 400 bieten soll. Je höher das zu erzielende Maß an Sicherheit ist, desto höher ist der zu erzielende Authentifizierungsgrad, welcher durch den entsprechenden Schwellenwert definiert wird. Für die nachzuweisenden Merkmale werden Messwerte von den Sensoren 130, 230 abgefragt. Dazu authentifizieren sich das mobile Kommunikationssystem 100 und das Sensorgerät 200 gegenseitig. Diese Authentifizierung kann analog zu der Authentifizierung zwischen dem mobilen Kommunikationssystem 100 und dem Computersystem 300 erfolgen. Dazu sind beispielsweise zusammen mit den Referenzwerten 116 Daten gespeichert, auf Basis deren die Sensoren identifiziert werden können, welche die entsprechenden Messwerte erfassen können. Nach Ausführungsformen kann auch die Authentifizierungsanfrage einzelne oder alle Sensoren 130, 230 vorgeben, durch welche die Messwerte erfasst werden sollen. Die abgefragten Messwerte werden von den Sensoren 130, 230 an das mobile Kommunikationssystem 100 bzw. innerhalb des mobile Kommunikationssystem 100 übertragen. Die Messwerte werden mit den Referenzwerten 116 der ausgewählten Merkmalskombination verglichen und es wird ein Authentifizierungsgrad des Nutzers unter Verwendung des Grads der Übereinstimmungen zwischen den Messwerten und den Referenzwerten bestimmt.

### 3. Erzeugen und Senden eines Authentifizierungstokens durch den Mobiles Kommunikationssystem 100.

Falls der bestimmte Authentifizierungsgrad über dem Schwellenwert für eine erfolgreiche Authentifizierung liegt, wird durch das mobile Kommunikationssystem 100 Authentisierungstoken erzeugt und an das Computersystem 300 zur Bestätigung einer erfolgreichen Authentifizierung des Nutzers 400 versandt. Der Authentifizierungstoken enthält beispielsweise ein oder mehrere Attribute des authentifizierten Nutzers 400. Ferner umfasst das Authentifizierungstoken beispielsweise den für den Nutzer 400 bestimmten Authentifizierungsgrad. Zudem kann das Authentifizierungstoken beispielsweise angeben, auf welcher Merkmalskombination der ermittelte Authentifizierungsgrad beruht. Diese von dem Authentifizierungstoken umfassten Daten werden durch das mobile Kommunikationssystem 100 mit Hilfe des privaten Schlüssels 114 signiert und an das Computersystem 300 übertragen. Dadurch wird das Computersystem 300 über die durch das Kommunikationssystem 100 ausgeführte Authentifizierung sowie die ausgelesenen Attribute in Kenntnis gesetzt, sodass das Computersystem 300 diese Attribute prüfen kann, um danach ggf. den von dem Nutzer 400 angeforderten Dienst zu erbringen. Nach Ausführungsbeispielen umfasst das Zertifikat 318 des Computersystems 300 einen Berechtigungsnachweis des Computersystems 300 zu einem Zugriff auf die entsprechenden Attribute.

Durch die Authentifizierung des Nutzers 400 durch das mobile Kommunikationssystem 100 und die gegenseitige Authentifizierung zwischen dem Computersystem 300 und dem mobilen Kommunikationssystem 100 wird der notwendige Vertrauensanker geschaffen, sodass das Computersystem 300 sicher sein kann, dass die Authentifizierung des Nutzer 400 durch das mobile Kommunikationssystem 100 zuverlässig ist. Zudem kann das Computersystem 300 Attribute des Nutzer 400 erhalten, deren Authentizität von dem mobilen Kommunikationssystem 100 bezeugt wird.

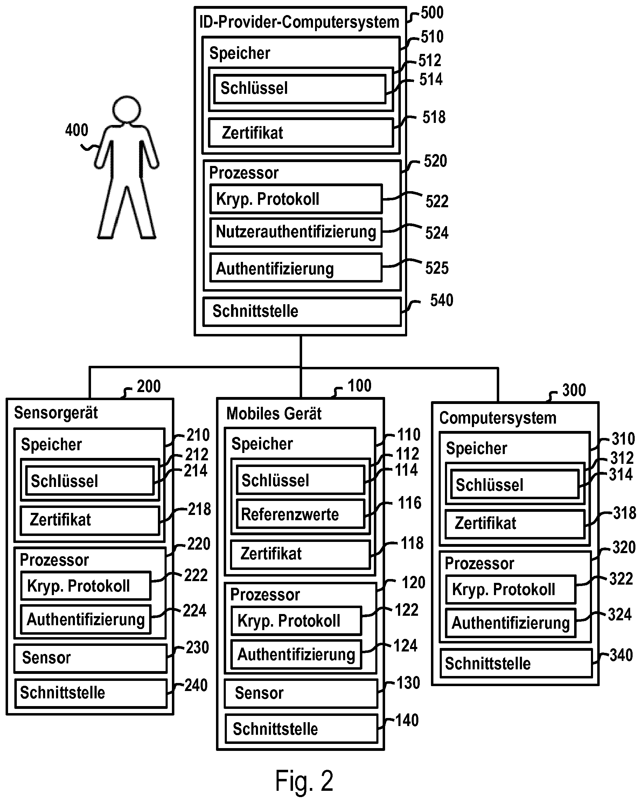

Die Figur 2 zeigt eine zweite beispielhafte Ausführungsform. In dem in Figur 2 gezeigten Fall erfolgt die Nutzerauthentifizierung durch ein stationäres ID-Provider-Computersystem 500. Dieses ID-Provider-Computersystem 500 kann beispielsweise einem zentralen ID-Providerservice zugeordnet sein. Alternativerweise kann es sich bei dem ID-Provider-Computersystem 500 um ein dem Nutzer 400 zugeordnetes Nutzer-Computersystem handeln, welches beispielsweise als ein entfernter (remote) Server in einer Client-Server-Umgebung implementiert ist.

Zur Ausführung der Nutzerauthentifizierung umfasst das ID-Provider-Computersystem 500 Programminstruktionen 524. Ferner umfasst das Computersystem 500 einen Speicher 510 mit einem geschützten Speicherbereich 512, in welchem ein beispielsweise dem zentralen ID-Providerservice oder dem Nutzer 400 zugeordneter privater Schlüssel 514 gespeichert ist. In dem Speicher 510 ist ferner ein Zertifikat 518 des ID-Provider-Computersystem 500 mit einem zu dem privaten Schlüssel 514 gehörigen öffentlichen Schlüssel gespeichert. Ferner umfasst das ID-Provider-Computersystem 500 einen Prozessor 520 und eine Schnittstelle 540 sowie Programminstruktionen 525 zum Authentifizieren des ID-Provider-Computersystem 500 gegenüber den anderen Systemen, d.h. Sensorgerät 200, mobiles Kommunikationssystem100 und Computersystem 300.

Gemäß der in Figur 2 gezeigten Ausführungsform erfolgt die Nutzerauthentifizierung durch das ID-Provider-Computersystem 500, d.h. das ID-Provider-Computersystem 500 empfängt eine Authentifizierungsanfrage von dem Computersystem 300, wählt eine nachzuweisende Merkmalskombination aus und fragt entsprechende Messwerte von den Sensoren 230, 130 des Sensorgeräts 200 bzw. des mobilen Kommunikationssystems 100 ab. Nach Ausführungsformen kann eine Mehrzahl von Sensorgeräten entsprechend dem Sensorgerät 200 vorgesehen sein.

Die Referenzwerte 116 für die nachzuweisenden Merkmale werden hier allerdings nicht durch das ID-Provider-Computersystem 500, sondern durch das mobile Kommunikationssystem 100 bereitgestellt. Zum Vergleichen der abgefragten Messwerte mit den Referenzwerte 116, werden beispielsweise die Referenzwerte 116 über eine kryptographisch gesicherte Verbindung, insbesondere eine mittels Ende-zu-Ende-Verschlüsselung geschützte Verbindung, zwischen dem ID-Provider-Computersystem 500 und dem mobilem Kommunikationssystem 100 ausgelesen. Nach einer alternativen Ausführungsform, überträgt das ID-Provider-Computersystem 500 die abgefragten Messwerte über eine kryptographisch gesicherte Verbindung, insbesondere eine mittels Ende-zu-Ende-Verschlüsselung geschützte Verbindung, an das mobilem Kommunikationssystem 100, welches einen Vergleich mit den Referenzwerten 116 durchführt und lediglich das Ergebnis an das ID-Provider-Computersystem 500 überträgt. Das Ergebnis können entweder die Vergleichswerte für jeden einzelnen Messwert oder bereits der resultierende Authentifizierungsgrad sein. Im Falle einzelner Vergleichswerte bestimmt das ID-Provider-Computersystem 500 den Authentifizierungsgrad. Nach einer weiteren Ausführungsform werden die abgefragten Messwerte direkt an das mobile Kommunikationssystem 100 übertragen bzw. von diesem auf eine Aufforderung des ID-Provider-Computersystems 500 hin abgefragt und mit den referenzwerten 116 verglichen. Falls der so bestimmte Authentifizierungsgrad über einem Schwellenwert für eine erfolgreiche Authentifizierung liegt, erzeugt das ID-Provider-Computersystem 500 einen Authentisierungstoken zur Bestätigung einer erfolgreichen Authentifizierung des Nutzers 400 und sendet diesen an das Computersystem 300.

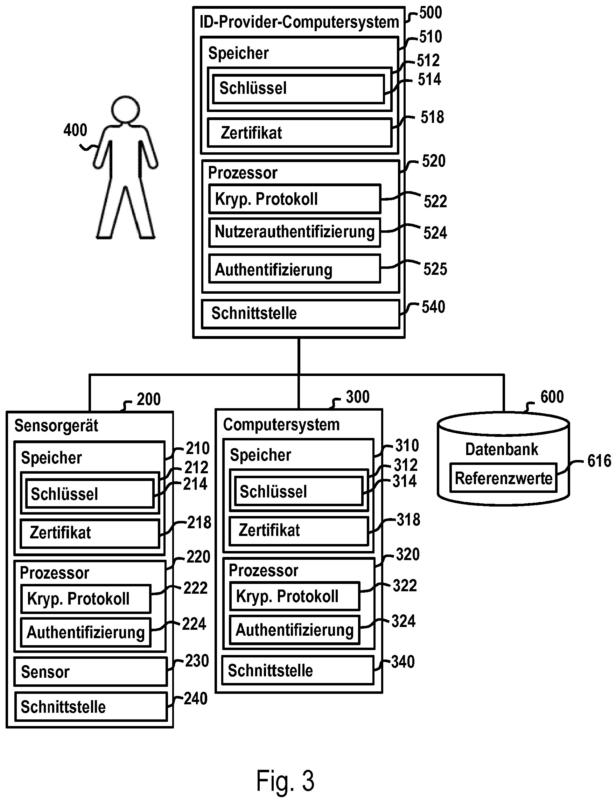

Die Figur 3 zeigt schließlich eine entsprechend derjenigen aus Figur 2, jedoch ohne mobiles Kommunikationssystem 100. Die Nutzerauthentifizierung erfolgt wiederum durch das ID-Provider-Computersystem 500. Die Referenzwerte 616 werden durch eine Datenbank 600 bereitgestellt, welche Teil des ID-Provider-Computersystem 500 sein kann, beispielsweise des Speichers 510, oder die als eigenständige Komponente bereitgestellt wird, auf welche das ID-Provider-Computersystem 500 Zugriff besitzt. Beispielsweise wird die Datenbank 600 mittels eines Servers bereitgestellt, welcher in eine Server-Client-Umgebung eingebunden ist. Schließlich kann der Vergleich zwischen Messwerten und Referenzwerten 616 wiederum entweder durch das ID-Provider-Computersystem 500 durchgeführt werden, welches die entsprechenden Referenzwerten 616 aus der Datenbank 600 ausliest, sodass die Nutzerauthentifizierung ausschließlich durch das ID-Provider-Computersystem 500 ausgeführt wird, oder durch die Datenbank 600 selbst, welche zu diesem Zwecke über entsprechende Programminstruktionen und zusätzliche Hardware verfügt.

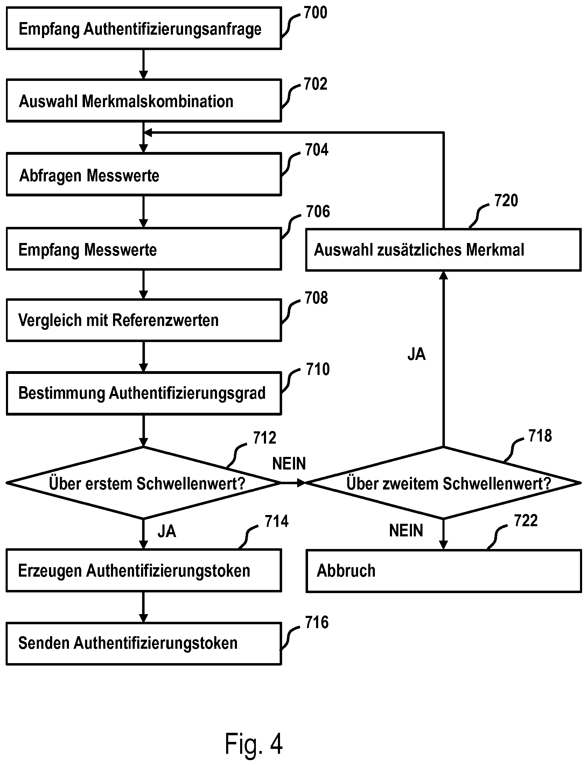

Die Figur 4 zeigt eine erste Ausführungsform eines exemplarischen Verfahrens. In Schritt 700 wird eine Authentifizierungsanfrage empfangen. Hierzu wird eine Verbindung zwischen dem ID-Provider in Form eines mobilen Kommunikationssystems oder eines stationären ID-Provider-Computersystems und einem anfragenden Computersystem, beispielsweise ein Dienst-Computersystem, aufgebaut, wobei es sich bei der Verbindung vorzugsweise um eine gesicherte Verbindung handelt, beispielsweise nach einem so genannten Secure Messaging-Verfahren. Zudem erfolgt eine gegenseitige Authentifizierung zwischen ID-Provider und Computersystem über die aufgebaute Verbindung. In Schritt 702 erfolgt eine Auswahl einer für eine erfolgreiche Authentifizierung des Nutzers nachzuweisende Kombination von Merkmalen. Diese Auswahl kann von der Authentifizierungsanfrage vorgegeben oder eingeschränkt sein. Beispielsweise kann sie von dem Kontext, in dem die Authentifizierungsanfrage gestellt wird und der aus der Authentifizierungsanfrage ablesbar ist, erfolgen. Die Merkmale werden dabei so ausgewählt, dass sich aus einem positiven Nachweis der einzelnen Merkmale ein Authentifizierungsgrad des Nutzers ergeben kann, welcher über einem Schwellenwert für eine erfolgreiche Authentifizierung des Nutzers liegt. Der entsprechende Schwellenwert kann beispielsweise ebenfalls von der Authentifizierungsanfrage vorgegeben sein oder sich aus deren Kontext ergeben.

In Schritt 704 werden Messwerten der für die Authentifizierung nachzuweisenden Merkmale von Sensoren abgefragt. Diese Sensoren werden beispielsweise von ein oder mehreren Sensorgeräten mit jeweils ein oder mehreren Sensoren bereitgestellt. Nach Ausführungsformen umfasst der ID-Provider Daten; aus denen sich ergibt, welcher Sensor dazu konfiguriert und/oder vorgesehen ist Messwerte für welches Merkmal bereitzustellen. Nach weiteren Ausführungsformen werden entsprechende Daten von der Authentifizierungsanfrage bereitgestellt. In Schritt 706 werden die abgefragten Messwerte von den Sensoren bzw. Sensorgeräten empfangen. Hierzu werden gesicherte Verbindung, beispielsweise nach dem Secure Messaging-Verfahren, zwischen ID-Provider und Sensorgeräten aufgebaut. Zudem erfolgt beispielsweise eine gegenseitige Authentifizierung zwischen ID-Provider und Sensorgeräten über die aufgebaute Verbindung.

In Schritt 708 werden die empfangenen Messwerte mit den Referenzwerten der ausgewählten Merkmalskombination verglichen. In Schritt 710 wird der Authentifizierungsgrad des Nutzers unter Verwendung des Grads der Übereinstimmungen zwischen den Messwerten und den Referenzwerten bestimmt. In Schritt 712 wird geprüft, ob der Authentifizierungsgrad über einem ersten Schwellenwert für eine erfolgreiche Authentifizierung liegt. Falls dies der Fall ist, wird in Schritt 714 ein Authentisierungstoken zur Bestätigung einer erfolgreichen Authentifizierung des Nutzers erzeugt und in Schritt 716 an die Instanz versandt, welche die Authentifizierungsanfrage gestellt hat oder an eine in der Authentifizierungsanfrage angegebene Instanz.

Falls der bestimmte Authentifizierungsgrad nicht über dem ersten Schwellenwert für eine erfolgreiche Authentifizierung liegt, wird in Schritt 718 geprüft, ob der Authentifizierungsgrad über einem zweiten Schwellenwert liegt, welcher niedriger als der erste Schwellenwert ist. Ist dies der Fall, so wird in Schritt 720 zumindest ein zusätzliches Merkmal ausgewählt und das Verfahren mit Schritt 704 vorgesetzt, wobei der Authentifizierungsgrad unter Verwendung des zusätzlichen Merkmals aktualisiert wird. Ist dies nicht der Fall, so wird in das Authentifizierungsverfahren in Schritt 722 abgebrochen.

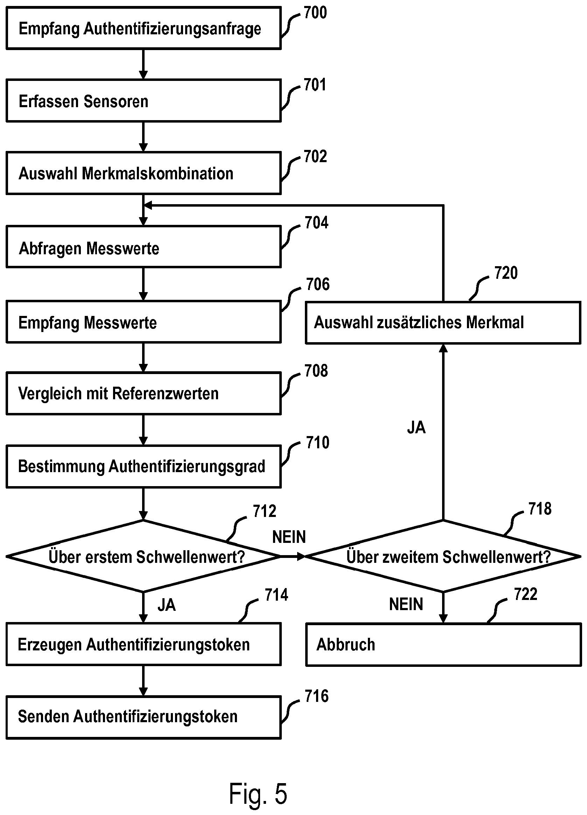

Die Figur 5 zeigt eine zweite Ausführungsform eines exemplarischen Verfahrens, welches zusätzlich zu den Schritten des Verfahren aus Figur 4 den Schritt 701 aufweist. In Schritt 701 wird nach dem Empfang der Authentifizierungsanfrage in Schritt 700 bestimmt, welche Sensoren zum Erfassen von Messwerten aktuell zur Verfügung stehen. Hierzu werden beispielsweise entsprechende Anfragen an mögliche Sensorgeräte gesandt oder entsprechende Anwesenheits-bzw. Bereitschaftsbestätigungen von den Sensorgeräten empfangen und protokolliert. Auf Basis der zur Verfügung stehenden Sensoren wird eine Vorauswahl möglicher Merkmale getroffen, aus der in Schritt 702 eine nachzuweisende Merkmalskombination ausgewählt wird.

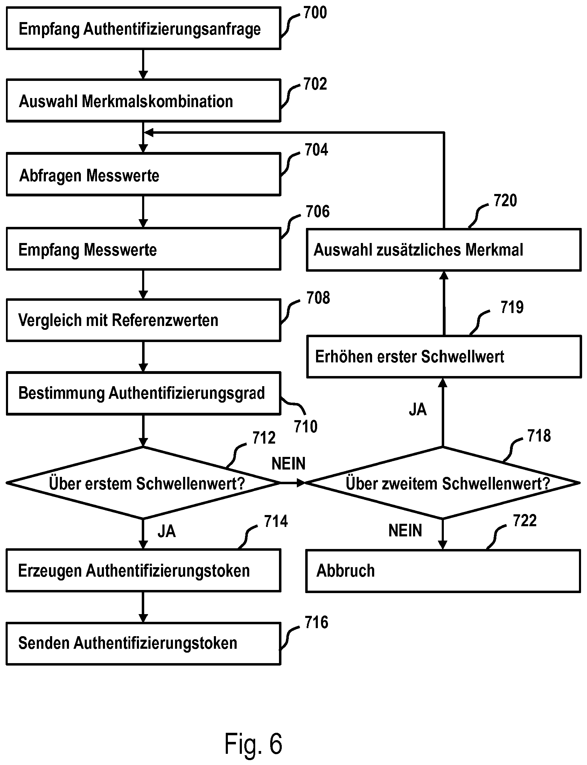

Die Figur 6 zeigt eine dritte Ausführungsform eines exemplarischen Verfahrens, welches zusätzlich zu den Schritten des Verfahren aus Figur 4 den Schritt 719 aufweist, falls in Schritt 718 festgestellt wird, dass der bestimmte Authentifizierungsgrad über dem zweiten Schwellenwert liegt. In Schritt 719 wird der erste Schwellenwert erhöht, sodass der unter Verwendung des zumindest einen zusätzlichen Merkmals aus Schritt 720 aktualisierte Authentifizierungsgrad einen höheren Schwellenwert übertreffen muss. Das erzielte Sicherheitsniveau des Verfahrens wird dadurch angehoben. Nach Ausführungsformen wird in Schritt 719 zudem auch der zweite Schwellenwert erhöht.

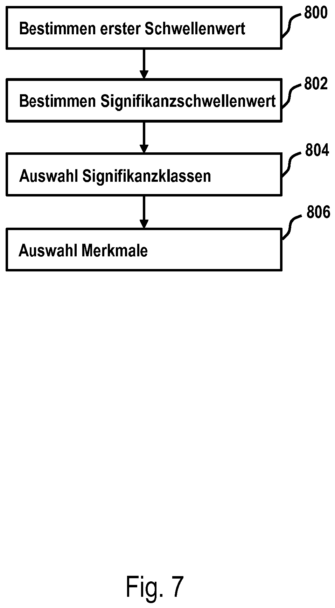

Die Figur 7 zeigt eine vierte Ausführungsform eines exemplarischen Verfahrens, in welcher die Auswahl einer Merkmalskombination gemäß Schritt 702 der Figuren 4 bis 6 im Detail gezeigt wird. In Schritt 800 wird zunächst für die Authentifizierungsanfrage 800 ein Schwellenwert für eine erfolgreiche Authentifizierung bestimmt. Dieser Schwellenwert wird beispielsweise von der Authentifizierungsanfrage vorgegeben oder ergibt sich aus deren Kontext. Beispielsweise ist der Instanz, von weleher die Authentifizierungsanfrage stammt, oder der Vorgangsart für welche die Nutzerauthentifizierung benötigt wird ein bestimmter Schwellenwert zugeordnet. Den Merkmalen, für welche Referenzwerte bereitgestellt werden, ist zudem jeweils ein Signifikanzwert zugeordnet, wobei die Signifikanzwerte angeben, wie Signifikat ein Merkmal für den Nutzer ist, d.h. inwiefern es den Nutzer gegenüber anderen Personen unterscheidet und somit zu einer Authentifizierung des Nutzers beitragen kann. Der Authentifizierungsgrad wird dabei unter Verwendung der Signifikanzwerte der ausgewählten Merkmale bestimmt. In Schritt 802 wird ein Signifikanzschwellenwert bestimmt, welcher mindestens zu überschreiten ist, damit die ausgewählten Merkmale zu einem Authentifizierungsgrad, der über dem in Schritt 800 Schwellenwert für eine erfolgreiche Authentifizierung liegt, falls die der Vergleich zwischen Messwert und referenzwert für alle Merkmale positiv ausfällt.

Die Merkmale sind gemäß ihrem jeweiligen Signifikanzwert in Signifikanzklassen eingeteilt. In Schritt 804 erfolgt eine Auswahl von Signifikanzklassen und einer Anzahl von Merkmalen pro ausgewählter Signifikanzklasse, sodass der in Schritt 802 bestimmte Signifikanzschwellenwert überschritten wird. In Schritt 806 werden aus den einzelnen ausgewählten Signifikanzklassen jeweils so viele Merkmale ausgewählt, wie in Schritt 804 festgelegt. Hierbei erfolgt die Auswahl der einzelnen Merkmale aus den Signifikanzklassen beispielsweise zufällig.

### Bezugszeichenliste

- 100: Mobiles Kommunikationssystem
- 110: Speicher
- 112: geschützter Speicherbereich
- 114: privater Schlüssel
- 116: Datenbank mit Referenzwerten
- 118: Zertifikat
- 120: Prozessor
- 122: Kryptographisches Protokoll
- 124: Instruktionen zur Nutzerauthentifizierung
- 125: Instruktionen zur Geräteauthentifizierung
- 130: Sensor
- 140: Schnittstelle
- 200: Sensorgerät
- 210: Speicher
- 212: geschützter Speicherbereich
- 214: Privater Schlüssel
- 218: Zertifikat
- 220: Prozessor
- 222: Kryptographisches Protokoll
- 224: Instruktionen zur Geräteauthentifizierung
- 230: Sensor
- 240: Schnittstelle
- 300: Computersystem
- 310: Speiche
- 312: geschützter Speicherbereich
- 314: Privater Schlüssel
- 318: Zertifikat
- 320: Prozessor
- 322: Kryptographisches Protokoll
- 324: Instruktionen zur Geräteauthentifizierung
- 340: Schnittstelle
- 400: Nutzer
- 500: ID-Provider-Computersystem
- 510: Speicher
- 512: geschützter Speicherbereich
- 514: privater Schlüssel
- 518: Zertifikat
- 520: Prozessor
- 522: Kryptographisches Protokoll
- 524: Instruktionen zur Nutzerauthentifizierung
- 525: Instruktionen zur Geräteauthentifizierung
- 540: Schnittstelle
- 600: Datenbank
- 616: Referenzwerte

## Patentansprüche

1. Verfahren zur dynamischen Multifaktorauthentifizierung eines Nutzers (400) durch ein ID-Provider-Computersystem (100, 500), welches Zugriff auf eine Datenbank mit dem Nutzer (400) zugeordneten Referenzwerten (116, 616) für eine Mehrzahl von Merkmalen besitzt, wobei das Verfahren umfasst:
• Empfangen einer Authentifizierungsanfrage zur Authentifizierung des Nutzers (400),
• auf das Empfangen der Authentifizierungsanfrage hin, dynamische Auswahl einer für eine erfolgreiche Authentifizierung des Nutzers (400) nachzuweisende Kombination von Merkmalen, welche dem Nutzer (400) zugeordnet sind, wobei die Auswahl für jede Authentifizierungsanfrage individuell erfolgt, sodass sich die Auswahl für identische Authentifizierungsanfragen dynamisch ändert,
• Abfragen von Messwerten der für die Authentifizierung nachzuweisenden Merkmale,
• Empfangen der abgefragten Messwerte,
• Vergleichen der empfangenen Messwerte mit den Referenzwerten (116, 616) der ausgewählten Merkmalskombination,
• Bestimmen eines Authentifizierungsgrads des Nutzers (400) unter Verwendung des Grads der Übereinstimmungen zwischen den Messwerten und den Referenzwerten (116, 616),
• falls der bestimmte Authentifizierungsgrad über einem ersten der Authentifizierungsanfrage zugeordneten Schwellenwert liegt, Erzeugen und Senden eines Authentisierungstokens zur Bestätigung einer erfolgreichen Authentifizierung des Nutzers (400).

2. Verfahren nach Anspruch 1, wobei das Verfahren, falls der bestimmte Authentifizierungsgrad über einem zweiten, nicht aber über dem ersten Schwellenwert liegt, ferner umfasst:
• Auswahl zumindest eines zusätzlichen Merkmals,
• Abfrage eines Messwerts des zusätzlichen Merkmals,
• Empfang des abgefragten Messwerts des zusätzlichen Merkmals,
• Vergleichen des empfangenen Messwerts des zusätzlichen Merkmals mit dem Referenzwert (116, 616) für das entsprechende Merkmal,
• Aktualisieren des Authentifizierungsgrads des Nutzers (400) unter Verwendung des Grads der Übereinstimmungen zwischen dem Messwert und dem Referenzwert (116, 616) des zusätzlichen Merkmals,
• falls der aktualisierte Authentifizierungsgrad über dem ersten Schwellenwert liegt, Erzeugen und Senden des Authentisierungstokens zur Bestätigung einer erfolgreichen Authentifizierung des Nutzers (400).

3. Verfahren nach Anspruch 2, wobei das Verfahren, falls der bestimmte Authentifizierungsgrad über dem zweiten, aber nicht über dem ersten Schwellenwert liegt, ferner umfasst:
Erhöhen des ersten Schwellenwerts,
und/oder wobei das Verfahren, falls eine vorbestimmte maximale Anzahl zusätzlicher Merkmale erreicht ist, ferner umfasst:
Abbrechen des Authentifizierungsverfahren.

4. Verfahren nach einem der vorhergehenden Ansprüche, wobei der erste Schwellenwert durch die Authentifizierungsanfrage vorgegeben wird und/oder
wobei die zur Abfrage von Messwerten zur Verfügung stehenden Sensoren (130, 230) erfasst werden und die Auswahl der Merkmale in Abhängigkeit von den erfassten Sensoren (130, 230) erfolgt und/oder
wobei der Authentifizierungsanfrage ein Kontext zugeordnet ist und die Auswahl der Merkmale aus einer dem Kontext zugeordneten Vorauswahl von Merkmalen erfolgt.

5. Verfahren nach einem der Ansprüche 1 bis 4, wobei den Merkmalen, für welche die Datenbank Referenzwerte (116, 616) bereitstellt, jeweils ein Signifikanzwert zugeordnet ist, wobei die Bestimmung des Authentifizierungsgrads unter Verwendung der Signifikanzwerte der ausgewählten Merkmale erfolgt und wobei die Auswahl der für eine erfolgreiche Authentifizierung des Nutzers (400) nachzuweisende Kombination von Merkmalen so erfolgt, dass die Signifikanzwerte einen zum Erreichen des ersten Schwellenwerts notwendigen Signifikanzschwellenwert überschreiten.

6. Verfahren nach Anspruch 6, wobei die Merkmale gemäß ihrem jeweiligen Signifikanzwert in Signifikanzklassen eingeteilt sind und die Auswahl der Merkmale nach Signifikanzklassen erfolgt, wobei die Anzahl der aus den einzelnen Signifikanzklassen jeweils auszuwählenden Merkmale und/oder die Auswahl der Merkmale innerhalb der einzelnen Signifikanzklassen zufällig erfolgt.

7. Verfahren nach Anspruch 7, wobei die Auswahl der Merkmale so erfolgt, dass zumindest ein Merkmal aus einer vorbestimmten Signifikanzklasse ausgewählt wird.

8. Verfahren nach einem der vorhergehenden Ansprüche, wobei das Verfahren, falls der bestimmte Authentifizierungsgrad unter dem zweiten Schwellenwert liegt, ferner umfasst:
Abbrechen des Authentifizierungsverfahren.

9. Verfahren nach einem der vorhergehenden Ansprüche, wobei die Messwerte von einem dem Nutzer (400) zugeordneten Sensorgerät (100, 230) abgefragt werden und/oder
wobei die Messwerte von einer Mehrzahl von unterschiedlichen Sensorgeräten (100, 230) abgefragt werden.

10. Verfahren nach einem der vorhergehenden Ansprüche, wobei das Authentisierungstoken den bestimmten Authentifizierungsgrad angibt und/oder
wobei es sich bei zumindest einem der Referenzwerte (116, 616) um einen Erwartungswert handelt, welcher auf Basis eines dem Nutzer (400) zugeordneten prädiktiven Modells bestimmt wurde, und/oder
wobei mehr Merkmale als zum Überschreiten des ersten Schwellwerts notwendig sind ausgewählt werden, wobei das Empfangen der abgefragten Merkmale, dass Vergleichen mit den Referenzwerten (116, 616) und das Bestimmen des Authentifizierungsgrads sukzessive für ein ausgewähltes Merkmal nach dem anderen erfolgt und bei Überschreiten des ersten Schwellwerts beendet wird.

11. Computerprogrammprodukt, insbesondere ein computerlesbares, nichtflüchtiges Speichermedium, mit ausführbaren Programminstruktionen zum Ausführen eines Verfahrens nach einem der Ansprüche 1 bis 10.

12. Computersystem (100, 500), welches konfiguriert ist zum Ausführen eines Verfahren nach einem der Ansprüche 1 bis 10.

13. Computersystem nach Anspruch 12, wobei das Computersystem einem zentralen ID-Provider-Computersystemservice (500) zugeordnet ist.

14. Computersystem nach Anspruch 13, wobei es sich bei dem Computersystem um ein dem Nutzer (400) zugeordnetes tragbares System (100) mit einer Kommunikationsschnittstelle (140) zum mobilen Datenaustausch handelt, welches einen Speicher (110) mit einem geschützten Speicherbereich (112) umfasst, in welchem die Datenbank (116) gespeichert ist.

## Claims

1. A method for dynamic multi-factor authentication of a user (400) by an ID provider computer system (100, 500) which has access to a database containing reference values (116, 616) associated with the user (400) for a plurality of features, wherein the method comprises the steps of:
• receiving an authentication request for authentication of the user (400),
• upon receipt of the authentication request, dynamically selecting a combination of features associated with the user (400) that are to be verified for successful authentication of the user (400), wherein the selection is made individually for each authentication request, such that the selection for identical authentication requests changes dynamically,
• querying measurement values of the features to be verified for the authentication,
• receiving the queried measurement values,
• comparing the received measurement values with the reference values (116, 616) of the selected combination of features,
• determining a degree of authentication of the user (400) using the degree of conformity between the measurement values and the reference values (116, 616),
• if the determined degree of authentication lies above a first threshold value associated with the authentication request, generating and sending an authentication token to confirm successful authentication of the user (400).

2. The method according to claim 1, wherein, if the determined degree of authentication lies above a second threshold value, but not above the first threshold value, the method also comprises the steps of:
• selecting at least one additional feature,
• querying a measurement value of the additional feature,
• receiving the queried measurement value of the additional feature,
• comparing the received measurement value of the additional feature with the reference value (116, 616) for the corresponding feature,
• updating the degree of authentication of the user (400) using the degree of conformity between the measurement value and the reference value (116, 616) of the additional feature,
• if the updated degree of authentication lies above the first threshold value, generating and sending the authentication token to confirm successful authentication of the user (400).

3. The method according to claim 2, wherein, if the determined degree of authentication lies above the second threshold value, but not above the first threshold value, the method also comprises the step of:
increasing the first threshold value,
and/or wherein, if a predetermined maximum number of additional features is reached, the method also comprises the step of:
terminating the authentication process.

4. The method according to one of the preceding claims, wherein the first threshold value is predefined by the authentication request and/or
wherein the sensors (130, 230) available for querying measurement values are detected and the features are selected depending on the detected sensors (130, 230), and/or
wherein the authentication request is assigned a context and the features are selected from a pre-selection of features assigned to the context.

5. The method according to one of claims 1 to 4, wherein the features for which the database provides reference values (116, 616) are each assigned a significance value, wherein the degree of authentication is determined with use of the significance values of the selected features, and wherein the combination of features to be verified for successful authentication of the user (400) is selected such that the significance values exceed a significance threshold value necessary to reach the first threshold value.

6. The method according to claim 6, wherein the features are divided into significance classes according to their respective significance values and the features are selected according to significance classes, wherein the number of features to be selected from the individual significance classes is random and/or the features within the individual significance classes are selected randomly.

7. The method according to claim 7, wherein the features are selected such that at least one feature is selected from a predetermined significance class.

8. The method according to one of the preceding claims, wherein, if the determined degree of authentication lies below the second threshold value, the method also comprises the step of:
terminating the authentication process.

9. The method according to one of the preceding claims, wherein the measurement values are queried from a sensor device (100, 230) associated with the user (400), and/or
wherein the measurement values are queried from a plurality of different sensor devices (100, 230).

10. The method according to one of the preceding claims, wherein the authentication token specifies the determined degree of authentication, and/or
wherein at least one of the reference values (116, 616) is an expected value which has been determined on the basis of a predictive model associated with the user (400), and/or
wherein more features than are necessary to exceed the first threshold value are selected, wherein, for one selected feature after the other, in succession, the queried feature is received, is compared with a reference value (116, 616) and a degree of authentication is determined, and this process is terminated in the event that the first threshold value is exceeded.

11. A computer program product, in particular a computer-readable, non-volatile storage medium, with executable program instructions for carrying out a method according to one of claims 1 to 10.

12. A computer system (100, 500) which is configured to carry out a method according to one of claims 1 to 10.

13. The computer system according to claim 12, wherein the computer system is associated with a central ID provider computer system service (500).

14. The computer system according to claim 13, wherein the computer system is a portable system (100) assigned to the user (400) and has a communication interface (140) for mobile data exchange and comprises a memory (110) with a protected memory region (112) in which the database (116) is stored.

## Revendications

1. Procédé d'authentification multi-facteur dynamique d'un utilisateur (400) par un système informatique fournisseur d'ID (100, 500), lequel possède un accès à une banque de données avec des valeurs de référence (116, 616) associées à l'utilisateur (400) pour une multiplicité de caractéristiques, le procédé comprenant :
• la réception d'une demande d'authentification pour l'authentification de l'utilisateur (400),
• suite à la réception de la demande d'authentification, la sélection dynamique d'une combinaison de caractéristiques, lesquelles sont associées à l'utilisateur (400), à indiquer pour une authentification réussie de l'utilisateur (400), où la sélection a lieu de manière individuelle pour chaque demande d'authentification de sorte que la sélection se modifie de manière dynamique pour des demandes d'authentification identiques,
• la consultation de valeurs de mesure des caractéristiques à indiquer pour l'authentification,
• la réception des valeurs de mesure consultées,
• la comparaison des valeurs de mesure reçues avec les valeurs de référence (116, 616) de la combinaison de caractéristiques sélectionnée,
• la détermination d'un degré d'authentification de l'utilisateur (400) moyennant l'emploi du degré de concordance entre les valeurs de mesure et les valeurs de référence (116, 616),
• dans le cas où le degré d'authentification déterminé se situe au-dessus d'une première valeur limite associée à la demande d'authentification, la création et l'envoi d'un jeton d'authentification pour la confirmation d'une authentification réussie de l'utilisateur (400).

2. Procédé selon la revendication 1, le procédé, dans le cas où le degré d'authentification se situe au-dessus d'une deuxième valeur limite, mais non au-dessus de la première valeur limite, comprenant en outre :
• la sélection d'au moins une caractéristique supplémentaire,
• la consultation d'une valeur de mesure de la caractéristique supplémentaire,
• la réception de la valeur de mesure consultée de la caractéristique supplémentaire,
• la comparaison de la valeur de mesure reçue de la caractéristique supplémentaire avec la valeur de référence (116, 616) pour la caractéristique correspondante,
• l'actualisation du degré d'authentification de l'utilisateur (400) moyennant l'emploi du degré de concordance entre la valeur de mesure et la valeur de référence (116, 616) de la caractéristique supplémentaire,
• dans le cas où le degré d'authentification actualisé se situe au-dessus de la première valeur limite, la création et l'envoi du jeton d'authentification pour la confirmation d'une authentification réussie de l'utilisateur (400).

3. Procédé selon la revendication 2, le procédé, dans le cas où le degré d'authentification déterminé se situe au-dessus de la deuxième valeur limite, mais non au-dessus de la première valeur limite, comprenant en outre :
l'augmentation de la première valeur limite,
et/ou le procédé, dans le cas où un nombre maximal prédéfini de caractéristiques supplémentaires est atteint, comprenant en outre :
l'interruption du procédé d'authentification.

4. Procédé selon l'une des revendications précédentes, dans lequel la première valeur limite est donnée au préalable par la demande d'authentification et/ou
dans lequel les capteurs (130, 230) étant à disposition pour la consultation de valeurs de mesure sont détectés et la sélection des caractéristiques a lieu en fonction des capteurs (130, 230) détectés, et/ou
dans lequel la demande d'authentification est associée à un contexte et la sélection des caractéristiques a lieu à partir d'une sélection préalable de caractéristiques associées au contexte.

5. Procédé selon l'une des revendications 1 à 4, dans lequel une valeur d'importance est associée respectivement aux caractéristiques pour lesquelles la banque de données met des valeurs de référence (116, 616) à disposition, où la détermination du degré d'authentification a lieu moyennant l'emploi des valeurs d'importance des caractéristiques sélectionnées et où la sélection de la combinaison de caractéristiques à indiquer pour une authentification réussie de l'utilisateur (400) a lieu de sorte que les valeurs d'importance dépassent une valeur limite d'importance nécessaire pour atteindre la première valeur limite.

6. Procédé selon la revendication 6, dans lequel les caractéristiques sont ordonnées en classes d'importance selon leur valeur d'importance respective et la sélection des caractéristiques a lieu selon les classes d'importance, où le nombre des caractéristiques respectivement sélectionnées à partir des classes d'importance individuelles et/ou la sélection des caractéristiques dans les classes d'importance individuelles a lieu de manière aléatoire.

7. Procédé selon la revendication 7, dans lequel la sélection des caractéristiques a lieu de telle manière qu'au moins une caractéristique est choisie à partir d'une classe d'importance prédéterminée.

8. Procédé selon l'une des revendications précédentes, où le procédé, dans le cas où le degré d'authentification déterminé se situe en-dessous de la deuxième valeur limite, comprend en outre :
l'interruption du procédé d'authentification.

9. Procédé selon l'une des revendications précédentes, dans lequel les valeurs de mesure sont consultées à partir d'un appareil capteur (100, 230) associé à l'utilisateur (400), et/ou
dans lequel les valeurs de mesure sont consultées par une multiplicité d'appareils capteurs (100, 230) différents.

10. Procédé selon l'une des revendications précédentes, dans lequel le jeton d'authentification indique le degré d'authentification déterminé, et/ou
dans lequel il s'agit, pour au moins une des valeurs de référence (116, 616), d'une valeur d'attente, laquelle a été déterminée sur la base d'un modèle prédictif associé à l'utilisateur (400), et/ou
dans lequel plus de caractéristiques sont choisies que celles nécessaires pour dépasser la première valeur limite, où la réception des caractéristiques consultées, la comparaison avec les valeurs de référence (116, 616) et la détermination du degré d'authentification ont lieu successivement l'une après l'autre pour la caractéristique sélectionnée et sont terminées avec le dépassement de la première valeur limite.

11. Produit-programme informatique, notamment support de stockage lisible par ordinateur, non volatil, doté d'instructions de programme exécutables permettant de réaliser un procédé selon l'une des revendications 1 à 10.

12. Système informatique (100, 500), lequel est conçu pour l'exécution d'un procédé selon l'une des revendications 1 à 10.

13. Système informatique selon la revendication 12, où le système informatique est associé à un service de système informatique fournisseur d'ID (500) central.

14. Système informatique selon la revendication 13, où, dans le cas du système informatique il s'agit d'un système (100) portable associé à l'utilisateur (400) doté d'une interface de communication (140) permettant l'échange de données mobile, lequel comprend une mémoire (110) avec une zone de mémoire (112) sécurisée dans laquelle la banque de données (116) est enregistrée.
